(19) Europäisches Patentamt / European Patent Office / Office européen des brevets

(11) **EP 4 763 894 A1**

(12) **EUROPEAN PATENT APPLICATION**
published in accordance with Art. 153(4) EPC


(43) Date of publication:
**24.06.2026 Bulletin 2026/26**

(21) Application number: **24854191.4**

(22) Date of filing: **09.08.2024**

(51) International Patent Classification (IPC):
***C08J 7/04*** (2020.01) ***C08F 2/18*** (2006.01)
***C08F 290/06*** (2006.01) ***C08G 77/42*** (2006.01)
***C08J 3/05*** (2006.01) ***C08J 3/16*** (2006.01)
***C08K 3/36*** (2006.01) ***C08L 67/00*** (2006.01)
***C08L 83/04*** (2006.01) ***C08L 101/16*** (2006.01)

(52) Cooperative Patent Classification (CPC):
**C08F 2/18; C08F 290/06; C08G 77/42; C08J 3/05; C08J 3/16; C08J 7/04; C08K 3/36; C08L 67/00; C08L 83/04; C08L 101/16**

(86) International application number:
**PCT/JP2024/028738**

(87) International publication number:
**WO 2025/037601 (20.02.2025 Gazette 2025/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.08.2023 JP 2023131875**



(71) Applicants:
- **SHIN-ETSU CHEMICAL CO., LTD.**
  **Tokyo 100-0005 (JP)**
- **Nissin Chemical Industry Co., Ltd.**
  **Fukui 915-0802 (JP)**

(72) Inventors:
- **OKI Takahito**
  **Annaka-shi, Gunma 379-0224 (JP)**
- **MITSUISHI Hirofumi**
  **Echizen-shi, Fukui 915-0802 (JP)**
- **WATANABE Kentaro**
  **Echizen-shi, Fukui 915-0802 (JP)**

(74) Representative: **Angerhausen, Christoph**
**Boehmert & Boehmert**
**Anwaltspartnerschaft mbB**
**Pettenkoferstrasse 22**
**80336 München (DE)**


(54) **ELASTOMERIC COMPOSITE PARTICLES, METHOD FOR PRODUCING SAME, AND METHOD FOR PRODUCING ELASTOMERIC SPHERICAL PARTICLES**


(57) Provided are elastomer composite particles containing spherical elastomer particles including, as a constitutional unit, a (co)polymer exhibiting high degradability under external stimuli such as light. Also provided are a method for producing spherical elastomer particles and a method for producing the elastomer composite particles. The elastomer composite particles each include: a spherical elastomer particle that is a crosslinked particle of a copolymer having a polyester structure and a polyether structure; and polyorganosilsesquioxane or silica on the surface of the spherical elastomer particle. The spherical elastomer particles have a volume average particle diameter of 0.5 to 200 μm.


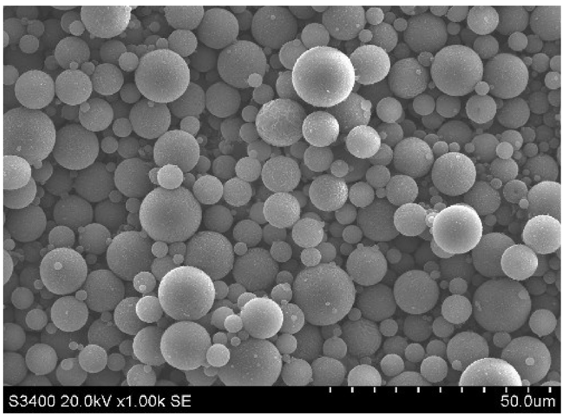


FIG.3

EP 4 763 894 A1

## Description

### Technical Field

The present invention relates to elastomer composite particles, a method for producing the same, and a method for producing spherical elastomer particles.

### Background Art

Examples of conventional raw material rubbers used for rubber products include:

<1> polymers whose repeating units include only conjugated diene units, typified by butadiene rubber, isoprene rubber, chloroprene rubber, and natural rubber;
<2> polymers whose repeating units include conjugated diene units and aromatic vinyl units as essential units, typified by styrene-butadiene copolymer rubber, styrene-isoprene copolymer rubber, and styrene-isoprene-butadiene copolymer rubber;
<3> polymers whose repeating units include conjugated diene units and $\alpha,\beta$-unsaturated nitril units as essential units, typified by acrylonitrile-butadiene copolymer rubber;
<4> polymers whose repeating units include acrylate units as essential units, typified by acrylic rubber;
<5> polymers whose repeating units include ethylene and an $\alpha$-olefin having 3 to 12 carbon atoms and optionally include a non-conjugated polyene, typified by ethylene-propylene rubber; and
<6> polymers whose repeating units include dimethylsiloxane units, typified by silicone rubber. These raw material rubbers have been widely used.

Spherical elastomer (rubber) particles, particularly those having an organic skeleton, obtained using any of the above raw material rubbers are mainly used for electronic material applications including electronic devices in order to improve various properties such as impact resistance, thermal shock resistance, and adhesion.

Proposals for the use of spherical silicone rubber particles and powders have been made across a wide range of industrial fields.

For example, the addition of spherical silicone rubber particles and powders to synthetic resin materials (Patent documents 1 and 2), synthetic rubber materials (Patent document 3), cosmetics (Patent documents 4 to 7), etc. has been proposed.

Spherical silicone rubber particles are used as a stress-reducing agent thanks to their "flexibility" and added to organic resins such as epoxy resins. Specifically, when the coefficient of thermal expansion of an electronic component differs from that of an organic resin such as an epoxy resin, stress acts on the resin, and this may cause cracking or breakage. However, the addition of the spherical silicone rubber particles can prevent the occurrence of cracking or breakage.

Specifically, an epoxy resin containing spherical particles of a cured product of a polymer having a linear organopolysiloxane block has been proposed (Patent document 8), and an epoxy resin containing spherical particles obtained by coating the surfaces of spherical silicone rubber particles with polyorganosilsesquioxane has been proposed (Patent document 9).

In one proposed method, a (meth)acrylate and diorganopolysiloxane having a radical-polymerizable functional group-containing organic group at one end are copolymerized in an emulsion system for preparing spherical silicone-containing rubber particles (Patent document 10).

These spherical organic rubber particles are used for the purpose of imparting slidability to a thermoplastic resin.

Spherical organic crosslinked rubber particles prepared by crosslinking a liquid composition containing an organic compound having aliphatic unsaturated bonds and a silicon-containing organic compound having silicon atom-bonded hydrogen atoms through a hydrosilylation reaction have been proposed (Patent document 11). These organic crosslinked rubber particles have good handleability and good dispersibility in various components such as resins, paints, and rubbers.

Spherical silicone rubber particles are used in a wide variety of cosmetics and cosmetic materials including makeup cosmetics such as foundations and makeup bases, basic skincare cosmetics such as creams and milky lotions, and sunscreen cosmetics for the purpose of imparting desired textures such as a soft feel and smoothness to the cosmetics, for the purpose of scattering light to create a natural-looking finish, and for the purpose of making pores, wrinkles, etc. less noticeable.

For example, a cosmetic containing polymethylsilsesquioxane particles/powder has been proposed (Patent document 12), and a makeup cosmetic containing spherical silicone rubber particles/powder has been proposed (Patent document 13). Moreover, a cosmetic containing silicone composite particles/powder prepared by coating spherical

silicone rubber particles with a polyorganosilsesquioxane resin has been proposed (Patent document 14). The spherical silicone rubber particles and the composite particles prepared by coating spherical silicone rubber particles with a polyorganosilsesquioxane resin can impart desired textures such as a soft feel and smoothness to cosmetics, as described above.

Prior Art Documents

Patent documents

Patent document 1: JP-B-S63-12489
Patent document 2: JP-B-H06-55805
Patent document 3: JP-A-H02-102263
Patent document 4: JP-A-H08-12546
Patent document 5: JP-A-H08-12545
Patent document 6: JP-B-H04-17162
Patent document 7: JP-B-H04-66446
Patent document 8: JP-A-S58-219218
Patent document 9: JP-A-H08-85753
Patent document 10: JP-A-H10-182987
Patent document 11: JP-A-2001-40214
Patent document 12: JP-A-S63-297313
Patent document 13: JP-A-H08-12524
Patent document 14: JP-A-H09-20631

Summary of Invention

Technical Problem

However, when the spherical silicone rubber particles added to various resins, cosmetics, etc., are released or discharged into natural environments such as soil, inland water, seawater, and oceans, these particles are expected to remain present in the environments without degradation because they do not have a degradable structure or unit or a structure or unit capable of imparting degradability. Moreover, due to their small particle size, they are very difficult to collect, and it is currently unavoidable for them to flow into the ocean etc.

In addition, plastics discharged into the ocean that include microplastics, which are plastics that have been degraded and reduced in size to the order of millimeters to micrometers, have the characteristic of adsorbing harmful substances, pathogens, etc. present in the environment. It is feared that, when marine organisms accidentally ingest these microplastics, ecosystems may be adversely affected. Therefore, there is a growing movement toward regulating microplastics.

Against this background, there is a growing demand for spherical silicone particles or spherical elastomer particles that can degrade in the environment after use and do not remain as particles (solids). To allow the spherical elastomer particles to degrade in the environment, it is necessary that the crosslinked structure forming the particles be cleaved and broken in the environment. However, the spherical silicone rubber particles do not have degradability due to their structure.

The present invention has been made in view of the foregoing circumstances, and it is an object to provide elastomer composite particles containing spherical elastomer particles including, as a constitutional unit, a (co)polymer exhibiting high degradability under external stimuli, such as light, heat, acids, and bases, and/or through the action of microorganisms and fungi in natural environments of, for example, inland water, and ocean water/seawater.

It is another object of the invention to provide a method for producing spherical elastomer particles including, as a constitutional unit, a (co)polymer exhibiting high degradability and to provide a method for producing the elastomer composite particles.

Solution to Problem

The present inventors have conducted extensive studies in order to achieve the foregoing objects and found that the problems can be solved by elastomer composite particles including, as core particles, spherical elastomer particles that are crosslinked particles of a copolymer having a specific polyester structure and a specific polyether structure. Thus,

the invention has been completed.

Accordingly, the present invention provides elastomer composite particles, a method for producing spherical elastomer particles, and a method for producing the elastomer composite particles, which are defined as:

<1> Elastomer composite particles, each comprising:

a spherical elastomer particle that is a crosslinked particle of a copolymer having a polyester structure and a polyether structure; and
polyorganosilsesquioxane or silica on a surface of the spherical elastomer particle,
wherein the spherical elastomer particles have a volume average particle diameter of 0.5 to 200 μm.

<2> The elastomer composite particles according to <1>, wherein the copolymer is a polyester-polyether copolymer having at least two radical-polymerizable unsaturated groups per molecule.

<3> The elastomer composite particles according to <2>, wherein the copolymer is a polyester-polyether copolymer represented by general formula (1) or (2) defined as:

[Chem. 1]

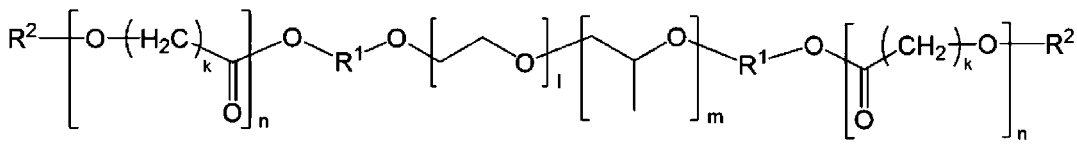
- (1)

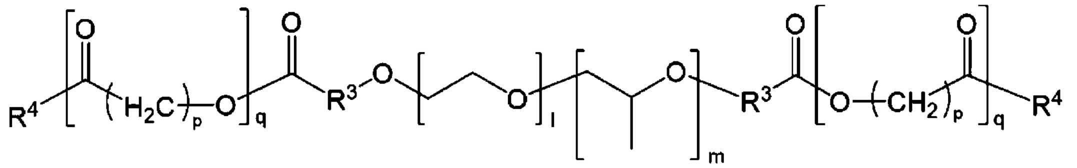
- (2)

wherein, in the general formula (1), each $R^1$ independently represents a divalent hydrocarbon group having 1 to 10 carbon atoms; each $R^2$ independently represents a radical-polymerizable functional group-containing organic group represented by general formula (3a), (3b), or (3c) shown below; each k is independently a number satisfying $1 \leq k \leq 10$; 1 is a number satisfying $1 \leq l \leq 1{,}000$, m is a number satisfying $1 \leq m \leq 1{,}000$; and each n is independently a number satisfying $1 \leq n \leq 100$, and
wherein, in the general formula (2), each $R^3$ independently represents a divalent hydrocarbon group having 1 to 10 carbon atoms; each $R^4$ independently represents a radical-polymerizable functional group-containing organic group represented by general formula (4a) or (4b) shown below; each p is independently a number satisfying $1 \leq p \leq 10$; 1 is a number satisfying $1 \leq l \leq 1{,}000$; m is a number satisfying $1 \leq m \leq 1{,}000$; and each q is independently a number satisfying $1 \leq q \leq 100$,

[Chem. 2]

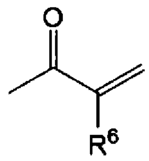

- (3a)

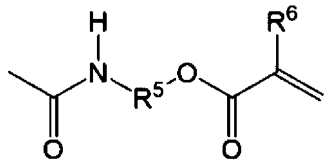

- (3b)

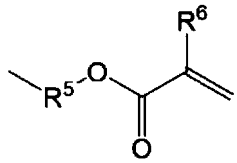

- (3c)

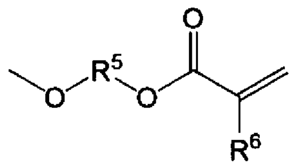

- (4a)

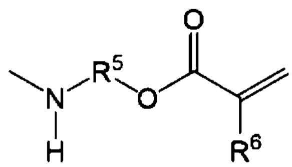

- (4b)

wherein, in the general formulas (3a), (3b), (3c), (4a), and (4b), each $R^5$ independently represents a divalent hydrocarbon group having 1 to 8 carbon atoms; and each $R^6$ independently represents a hydrogen atom or a hydrocarbon group having 1 to 3 carbon atoms.

<4> The elastomer composite particles according to <2>, wherein the copolymer is a polyester-polyether copolymer represented by general formula (5) defined as:

[Chem. 3]

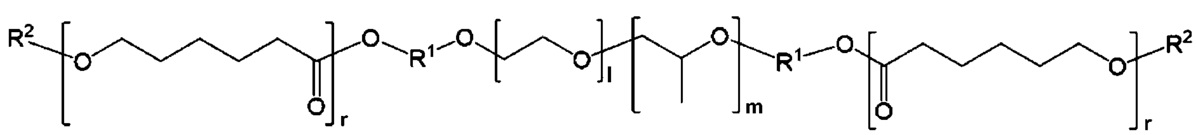

- (5)

wherein, in the general formula (5), each $R^1$ independently represents a divalent hydrocarbon group having 1 to 10 carbon atoms; each $R^2$ independently represents a radical-polymerizable functional group-containing organic group represented by general formula (3a), (3b), or (3c) shown below; l is a number satisfying $1 \leq l \leq 1{,}000$; m is a number satisfying $1 \leq m \leq 1{,}000$; and each r is independently a number satisfying $1 \leq r \leq 100$,

[Chem. 4]

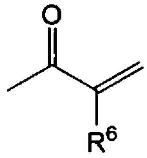

- (3a)

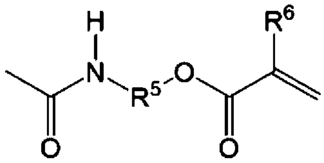

- (3b)

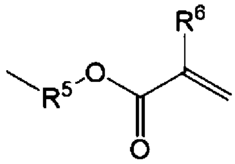

- (3c)

wherein, in the general formulas (3a), (3b), and (3c), each $R^5$ independently represents a divalent hydrocarbon group having 1 to 8 carbon atoms, and each $R^6$ independently represents a hydrogen atom or a hydrocarbon group having 1 to 3 carbon atoms.

<5> A method for producing spherical elastomer particles, the method comprising the steps i) to iii) of:

i) stirring and suspending components (A), (B), (C), and (D) to prepare a suspension composition, said components defined as

(A) a copolymer having a polymerizable group and having a polyester structure and a polyether structure,
(B) an oil phase component or an aqueous phase component in which the component (A) is insoluble or poorly soluble,
(C) a suspending agent, and
(D) a polymerization initiator;

ii) subjecting the component (A) in the suspension composition obtained through the step i) to radical polymerization to thereby obtain a spherical elastomer particle dispersion; and
iii) removing the component (B) present as a continuous phase from the spherical elastomer particle dispersion obtained through the step ii) by washing and drying to thereby obtain spherical elastomer particles.

<6> A method for producing the elastomer composite particles according to any one of <1> to <4>, the method comprising the step iv) of:
iv) adding component (I) to a liquid phase, containing components (E), (F), (G), and (H), to subject the component (I) to a hydrolysis-polymerization reaction, said components defined as:

(E) the spherical elastomer particles produced by the method according to claim 5, the spherical elastomer particles having a volume average particle diameter of 0.5 to 200 μm, the spherical elastomer particles being crosslinked particles having structural units derived from the copolymer having the polyester structure and the polyether structure,
(F) an alkaline material,
(G) at least one selected from a cationic surfactant and a cationic water-soluble macromolecular compound,
(H) water, and
(I) trialkoxysilane or tetraalkoxysilane.

Advantageous Effects of Invention

The elastomer composite particles of the invention have a polyester structure including a degradable unit skeleton in the particles. The crosslinked structure of the particles is cleaved in the presence of water, and therefore the

elastomer composite particles have degradability. In particular, particles having, as the polyester structure in the particles, a poly-ε-caprolactone structure, which is a microbe recognition skeleton, are expected to be used as spherical elastomer particles and elastomer composite particles having environmental degradability and biodegradability.

Therefore, the elastomer composite particles of the invention are particles having (bio)degradability and are expected to be used as an environmental load-reducing material.

The elastomer composite particles of the invention are particles with low cohesiveness and high dispersibility and are expected to exhibit an enhanced stress relaxation effect when mixed with various resins. Moreover, in cosmetic applications, mixing the elastomer composite particles of the invention is expected to improve textures such as a soft feel and smoothness and enhance the effect of imparting spreadability.

The elastomer composite particles of the invention can be prepared as hydrophilic particles by adjusting the coating (adhesion) weight of fine silica particles adhering to their surfaces and can be mixed with water-based cosmetics without using a dispersant such as an emulsifier.

Brief Description of Drawings

[FIG. 1] FIG. 1 is an electron microscope photograph of spherical elastomer particles obtained in production example 1.

[FIG. 2] FIG. 2 is an electron microscope photograph of spherical elastomer particles obtained in production example 3.

[FIG. 3] FIG. 3 is an electron microscope photograph (magnification: 1,000X) of elastomer composite particles (silica-coated spherical elastomer particles) obtained in working example 3.

[FIG. 4] FIG. 4 is an electron microscope photograph (magnification: 7,500X) of the elastomer composite particles (silica-coated spherical elastomer particles) obtained in the working example 3.

Description of Embodiments

The present invention will be described in detail below.

[Elastomer composite particles]

The elastomer composite particles of the invention each include: a spherical elastomer particle that is a crosslinked particle of a copolymer having a polyester structure and a polyether structure; and polyorganosilsesquioxane or silica on the surface of the spherical elastomer particle. Preferably, the elastomer composite particles include fine spherical polyorganosilsesquioxane particles or fine spherical silica particles adhering to the surfaces of the spherical elastomer particles.

Preferably, the elastomer composite particles of the invention have a spherical shape.

The term "spherical" as used herein not only refers to a perfect spherical particle shape but also encompasses deformed elliptical shapes with an average aspect ratio (the length of the maximum major axis / the length of the minimum minor axis) in the range of typically 1 to 4, preferably 1 to 2, more preferably 1.0 to 1.6, and still more preferably 1.0 to 1.4. As will be shown in a production method described later, when a method in which a copolymer having a polyester structure and a polyether structure is suspended and dispersed using a suspending agent to crosslink the copolymer is used, the shape of the particles obtained is spherical. The shape of the elastomer composite particles can be checked by observation using an optical microscope or an electron microscope. The aspect ratio of the particles is a value obtained by measuring the maximum major axes and minimum minor axes of randomly selected 50 particles in a microscope photograph and averaging the measurements.

In the present invention, the volume average particle diameter of the elastomer composite particles is within the range of 0.5 to 200 μm and more preferably within the range of 1.0 to 50 μm. If the volume average particle diameter is larger than the above-mentioned upper limit, the smoothness, softness, etc. of the particles deteriorate. This may result in a grainy feel, and light diffusibility deteriorates. If the volume average particle diameter is less than the above-mentioned lower limit, the flowability of the particles deteriorates, and the cohesiveness increases. This is unpreferable because sufficient smoothness and light diffusibility cannot be imparted.

The volume average particle diameter of the elastomer composite particles of the invention refers to a value measured as follows. Before measuring the volume average particle diameter, the diameters of randomly selected 50 particles in a microscope photograph of the elastomer composite particles are measured, and whether the average is more than or equal to 1 μm is determined. Various surfactants are used to redisperse the elastomer composite particles in water to prepare dispersions. When the result of the determination described above is more than or equal to 1 μm, the volume

average particle diameter refers to a value measured by an electric resistance method. When the result of the determination is less than 1 μm, the volume average particle diameter refers to a value measured by a laser diffraction/-scattering method.

Preferably, the rubber (elastomer) that is a component of the elastomer composite particles exhibits no tackiness or stickiness. The rubber hardness of the rubber (elastomer) that is a component of the elastomer composite particles may be measured using a type A durometer specified in JIS K6253, and this rubber hardness is preferably in the range of 5 to 90 and more preferably in the range of 10 to 80. Moreover, the rubber hardness of the rubber (elastomer) that is a component of the elastomer composite particles may be measured using an ASKER rubber hardness tester type C specified in The Society of Rubber Industry, Japan Standard (SRIS), and this rubber hardness is preferably in the range of 5 to 90, more preferably in the range of 20 to 85, and still more preferably in the range of 40 to 85.

If the rubber hardness value obtained by any of the above methods is less than 5, the cohesiveness of the particles is high, and the dispersibility may deteriorate. If the rubber hardness is larger than 90, the soft feel may deteriorate, which is undesirable.

- Spherical elastomer particles obtained as crosslinked particles of copolymer having polyester structure and polyether structure

The spherical elastomer particles in the elastomer composite particles of the invention are preferably polymer particles of a polyester-polyether copolymer having at least two radical-polymerizable unsaturated groups per molecule, i.e., crosslinked particles of the polyester-polyether copolymer having at least two radical-polymerizable unsaturated groups per molecule.

The aspect ratios of the spherical elastomer particles in the elastomer composite particles of the invention are defined in the same manner as described above, and the average value of the aspect ratios (defined as the length of the maximum major axis / the length of the minimum minor axis) of the spherical elastomer particles is in the range of generally 1 to 4, preferably 1 to 2, more preferably 1.0 to 1.6, and still more preferably 1.0 to 1.4.

The volume average particle diameter of the spherical elastomer particles in the elastomer composite particles of the invention is also defined in the same manner as described above. The volume average particle diameter of the spherical elastomer particles is in the range of 0.5 to 200 μm and more preferably in the range of 1.0 to 50 μm.

The polyester-polyether copolymer having at least two radical-polymerizable unsaturated groups per molecule is preferably a copolymer represented by the following general formula (1) or (2):

[Chem. 5]

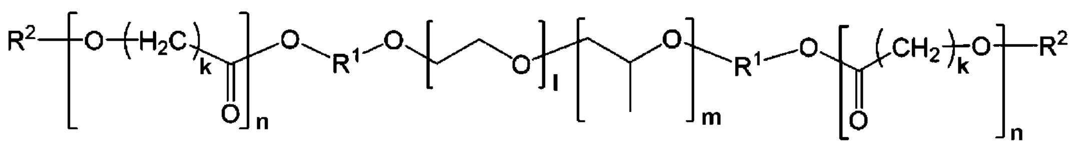

- (1)

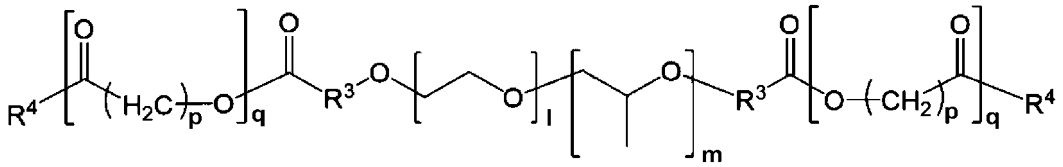

- (2)

wherein, in the general formula (1), each $R^1$ independently represents a divalent hydrocarbon group having 1 to 10 carbon atoms; each $R^2$ independently represents a radical-polymerizable functional group-containing organic group represented by general formula (3a), (3b), or (3c) shown below; each k is independently a number satisfying $1 \leq k \leq 10$; 1 is a number satisfying $1 \leq l \leq 1{,}000$; m is a number satisfying $1 \leq m \leq 1{,}000$; and each n is independently a number satisfying $1 \leq n \leq 100$, and

wherein, in the general formula (2), each $R^3$ independently represents a divalent hydrocarbon group having 1 to 10 carbon atoms; each $R^4$ independently represents a radical-polymerizable functional group-containing organic group represented by general formula (4a) or (4b) shown below; each p is independently a number satisfying $1 \leq p \leq 10$; l is a number satisfying $1 \leq l \leq 1{,}000$; m is a number satisfying $1 \leq m \leq 1{,}000$; and each q is independently a number satisfying $1 \leq q \leq 100$,

[Chem. 6]

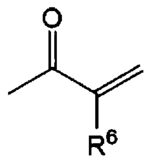

- (3a)

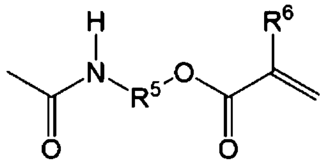

- (3b)

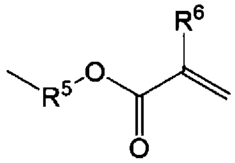

- (3c)

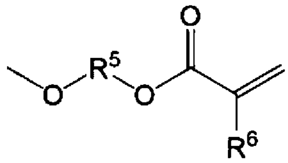

- (4a)

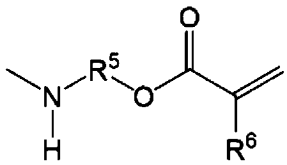

- (4b)

wherein, in the general formulas (3a), (3b), (3c), (4a), and (4b), each $R^5$ independently represents a divalent hydrocarbon group having 1 to 8 carbon atoms, and each $R^6$ independently represents a hydrogen atom or a hydrocarbon group having 1 to 3 carbon atoms.

Examples of $R^1$ include alkylene groups such as a methylene group, an ethylene group, a propylene group, a trimethylene group, a tetramethylene group, a pentamethylene group, a hexamethylene group, a heptamethylene group, and an octamethylene group. $R^1$ is preferably a methylene group, an ethylene group, a trimethylene group, or a tetramethylene group.

Examples of $R^3$ include alkylene groups such as a methylene group, an ethylene group, a propylene group, a trimethylene group, a tetramethylene group, a pentamethylene group, a hexamethylene group, a heptamethylene group, and an octamethylene group. $R^3$ is preferably a methylene group, an ethylene group, a trimethylene group, or a tetramethylene group.

$R^2$ represents a radical-polymerizable functional group-containing organic group represented by the general formula (3a), (3b), or (3c), and $R^4$ represents a radical-polymerizable functional group-containing organic group represented by the general formula (4a) or (4b).

Examples of $R^5$ in the general formulas (3b), (3c), (4a), and (4b) include alkylene groups such as a methylene group, an ethylene group, a propylene group, a trimethylene group, a tetramethylene group, a pentamethylene group, a hexamethylene group, a heptamethylene group, and an octamethylene group. $R^5$ is preferably a methylene group, an ethylene group, a trimethylene group, or a tetramethylene group.

Examples of $R^6$ in the general formulas (3a), (3b), (3c), (4a), and (4b) include a hydrogen atom and alkyl groups having 1 to 3 carbon atoms such as a methyl group, an ethyl group, and a propyl group. $R^6$ is preferably a hydrogen atom or a methyl group.

The radical-polymerizable functional group-containing organic groups represented by the general formulas (3a), (3b), (3c), (4a), and (4b) are residues derived from polymerizable monomers. Specific examples of the polymerizable monomers include hydroxy group-containing (meth)acrylates, isocyanate group-containing (meth)acrylates, and (meth) acryloyl chlorides.

Examples of the hydroxy group-containing (meth)acrylate include: C2-C8 hydroxyalkyl esters of (meth)acrylic acid such as hydroxyethyl (meth)acrylate and hydroxypropyl (meth)acrylate; and carboxy (meth)acrylates such as

carboxyethyl (meth)acrylate, (meth)acryloyloxyethyl succinate, and (meth)acryloyloxyethyl phthalate.

Examples of the isocyanate group-containing (meth)acrylate include isocyanatoethyl (meth)acrylate, isocyanatopropyl (meth)acrylate, isocyanatobutyl (meth)acrylate, and isocyanatohexyl (meth)acrylate.

Examples of the (meth)acryloyl chloride include acryloyl chloride, methacryloyl chloride, acryloyl bromide, and methacryloyl bromide.

The polyester structure (unit) in the polyester-polyether copolymer having at least two radical-polymerizable unsaturated groups per molecule is preferably degradable aliphatic polyester or aliphatic polyester known to exhibit high degradability.

Examples of the aliphatic polyester include poly-ε-caprolactone, poly-β-propiolactone, γ-butyrolactone, polylactic acid, polyhydroxybutyrate, polyglycolic acid, polyethylene adipate, polyhydroxybutyric acid, polyethylene succinate, and polybutylene succinate. From the viewpoint of degradability and ease of handling, a poly-ε-caprolactone structure is preferred.

In the general formula (1), each k is independently a number satisfying $1 \leq k \leq 10$ and preferably a number satisfying $1 \leq k \leq 6$.

In the general formula (2), each p is independently a number satisfying $1 \leq p \leq 10$ and preferably a number satisfying $1 \leq p \leq 6$.

In the general formula (1), each n is independently a number satisfying $1 \leq n \leq 100$, preferably a number satisfying $1 \leq n \leq 50$, and more preferably a number satisfying $2 \leq n \leq 20$.

In the general formula (2), each q is independently a number satisfying $1 \leq q \leq 100$, preferably a number satisfying $1 \leq q \leq 50$, and more preferably a number satisfying $2 \leq q \leq 20$.

If n and q are larger than their upper limits, the crystallinity of the polymer becomes high due to intra-/intermolecular interactions owing to ester structures (units). In this case, when the flowability of the copolymer is excessively low, the handleability in the step of preparing a suspension composition described later may be influenced.

In the general formulas (1) and (2), l is a number satisfying $1 \leq l \leq 1{,}000$ and preferably a number satisfying $2 \leq l \leq 100$.

In the general formulas (1) and (2), m is a number satisfying $1 \leq m \leq 1{,}000$ and preferably a number satisfying $10 \leq m \leq 500$.

If the value of l is larger than the above-mentioned upper limit, the crystallinity becomes high due to intra-/intermolecular interactions owing to ethylene oxide structures (units), and this may cause a reduction in the flowability of the copolymer. In this case, as in the above case, the handleability in the step of preparing a suspension composition described later may be influenced, which is undesirable.

The polyester-polyether copolymer having at least two radical-polymerizable unsaturated groups per molecule is preferably a copolymer represented by the following general formula (5) or (6), from the viewpoint of the handleability of raw materials and the ease of production:

[Chem. 7]

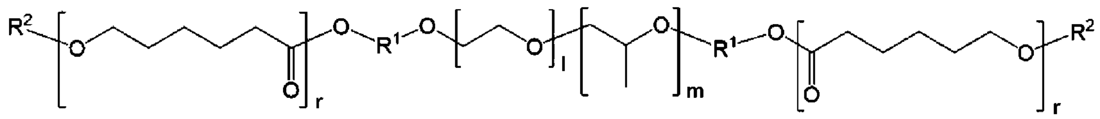

- (5)

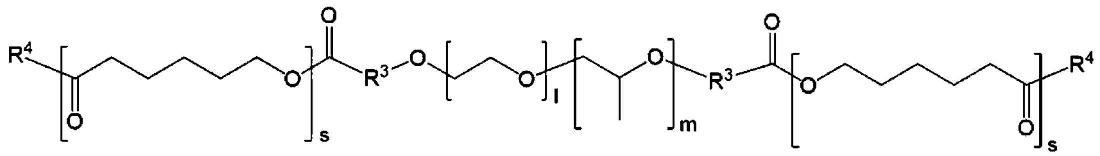

- (6)

wherein, in the general formula (5), each $R^1$ independently represents a divalent hydrocarbon group having 1 to 10 carbon atoms; each $R^2$ independently represents a radical-polymerizable functional group-containing organic group represented by the general formula (3a), (3b), or (3c); l is a number satisfying $1 \leq l \leq 1{,}000$, m is a number satisfying $1 \leq m \leq 1{,}000$; and each r is independently a number satisfying $1 \leq r \leq 100$,

wherein, in the general formula (6), each $R^3$ independently represents a divalent hydrocarbon group having 1 to 10 carbon atoms; each $R^4$ independently represents a radical-polymerizable functional group-containing organic group represented by the general formula (4a) or (4b); 1 is a number satisfying $1 \leq l \leq 1{,}000$; m is a number satisfying $1 \leq m \leq 1{,}000$; and each s is independently a number satisfying $1 \leq s \leq 100$.

Method for producing polyester-polyether copolymer

Examples of methods for producing the polyester-polyether copolymer, included in the elastomer composite particles of the invention, include a production method in which a polyether containing active hydrogen such as a polyether having a hydroxy group, a carboxy-modified polyether, or an amino-modified polyether is used as a starting material, and a poly-ε-caprolactone-modified polyether or a poly-γ-butyrolactone-modified polyether is obtained by ring-opening polymerization with cyclic-ε-caprolactone, γ-butyrolactone, etc., and then a polymerizable monomer having a radical-polymerizable unsaturated group is introduced via an ester bond, an ether bond, a urethane bond, an amide bond, etc.

From the viewpoint of reactivity during production, it is preferable that the terminal structure of each polyether is a structure in which a reactive functional group is bonded to a primary carbon atom.

Examples of the reaction conditions for the above production method include, but are not limited to, the following reaction conditions.

For example, 3.0 to 4.0 equivalents (functional group equivalent ratio) of cyclic-ε-caprolactone is added to 1.0 equivalent of a polyether or an active hydrogen-containing polyether such as a carboxy-modified polyether, and the mixture is allowed to react at 120°C for 4 to 6 hours in the presence of a well-known ring-opening polymerization catalyst to thereby obtain a poly-ε-caprolactone-modified polyether.

Next, for example, 1.0 to 1.25 moles (functional group equivalent ratio) of (meth)acryloyl chloride such as acryloyl chloride or isocyanate group-containing (meth)acrylate such as isocyanatoethyl (meth)acrylate is added relative to 1.0 mole of hydroxy groups in the obtained poly-ε-caprolactone-modified polyether. A reaction catalyst is optionally added to the mixture, and the resulting mixture is allowed to react at 40 to 100°C for 4 hours or longer.

After the reaction, alcohol etc. is added to the crude product for quenching, and the resulting product is subjected to filtration, washing with water, and/or adsorption treatment to remove by-products. Finally, the solvent is removed by evaporation, and an acrylic-modified poly-ε-caprolactone polyether (polyester-polyether copolymer) can thereby be obtained.

Examples of the polyester-polyether copolymer when a polyether having a hydroxy group is used as a starting material include copolymers represented by formulas (7a) and (7b) (only the structure on one side is shown because of their symmetric structure).

[Chem. 8]

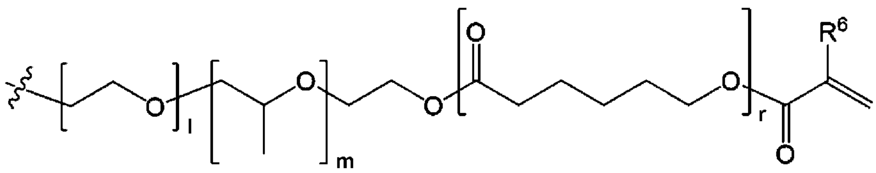

- (7a)

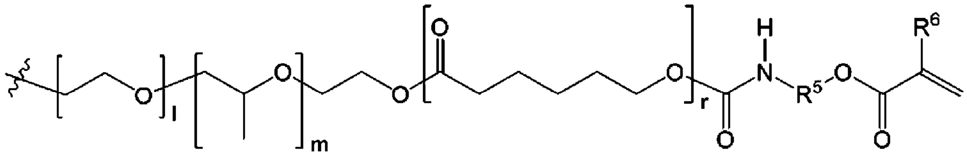

- (7b)

In the formulas (7a) and (7b), $R^5$ is a divalent hydrocarbon group having 1 to 8 carbon atoms, and $R^6$ is a hydrogen atom or a hydrocarbon group having 1 to 3 carbon atoms.

1, m, and r satisfy $1 \leq l \leq 1{,}000$, $1 \leq m \leq 1{,}000$, and $1 \leq r \leq 30$ and preferably satisfy $2 \leq l \leq 100$, $10 \leq m \leq 500$, and $2 \leq r \leq 10$.

Examples of the polyester-polyether copolymer when a carboxy-modified polyether is used as a starting material include copolymers represented by formulas (8a) and (8b) (only the structure on one side is shown because of their symmetric structure).

[Chem. 9]

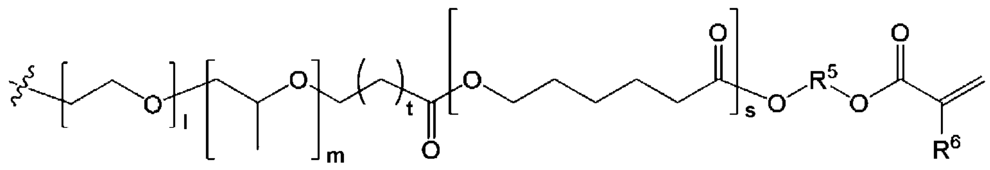

- (8a)

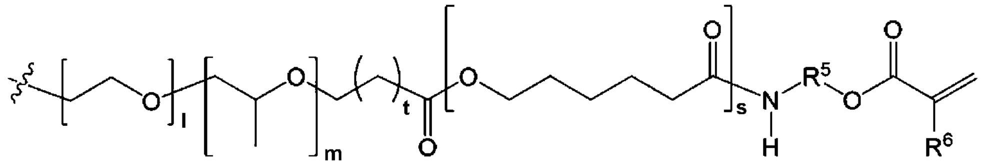

- (8b)

In the formulas (8a) and (8b), $R^5$ is a divalent hydrocarbon group having 1 to 8 carbon atoms, and $R^6$ is a hydrogen atom or a hydrocarbon group having 1 to 3 carbon atoms.

l, m, s, and t satisfy $1 \leq l \leq 1{,}000$, $1 \leq m \leq 1{,}000$, $1 \leq s \leq 30$, and $0 \leq t \leq 10$ and preferably satisfy $2 \leq l \leq 100$, $10 \leq m \leq 500$, $2 \leq s \leq 10$, and $1 \leq t \leq 10$.

No particular limitation is imposed on the catalyst used for ring-opening polymerization of cyclic-ε-caprolactone, and a well-known catalyst may be used.

Specific examples of the catalyst include: organotitanium-based compounds such as tetramethoxytitanium, tetraethoxytitanium, tetra-n-propoxytitanium, and tetra-n-butoxytitanium; organotin compounds such as di-n-butyltin laurate, diisobutyltin oxide, and dibutyltin diacetate; acetates of magnesium, calcium, zinc, etc.; antimony oxide; stannous halides; and perchloric acid.

The amount of the ring-opening polymerization catalyst added may be in the range of 1 to 10,000 ppm and is preferably 10 to 1,000 ppm based on the amount of the ε-caprolactone monomer (cyclic-ε-caprolactone).

To introduce the polymerizable monomer having a radical-polymerizable unsaturated group into the poly-ε-caprolactone-modified polyether, any of various catalysts may be used according to the reactive moiety (reactive functional group) of the polymerizable monomer and the skeleton to be formed, and a well-known catalyst may be used.

When the reaction of the polymerizable monomer and the poly-ε-caprolactone-modified polyether is an esterification reaction, a catalyst may be used, and examples of the (esterification) catalyst used for the esterification reaction include: Lewis acid catalysts such as alcoholates, carboxylates, and chelate compounds of titanium, zirconium, tin, aluminum and zinc, boron trifluoride, and boron trifluoride etherate; acid catalysts such as hydrochloric acid, sulfuric acid, hydrogen bromide, acetic acid, trifluoroacetic acid, methanesulfonic acid, and p-toluenesulfonic acid; and amine-based catalysts such as pentamethyldiethylenetriamine (PMDETA), trimethyltriazacyclononane (TACN), triethylamine (TEA), 4-(N,N-dimethylamino)pyridine (DMAP), 1,4-diazabicyclo(2,2,2)octane (DABCO), and tetramethylethylenediamine (TMEDA). In particular, amine-based catalysts are preferred from an economical point of view and the viewpoint of the stability of the product obtained through the esterification reaction.

When an amine-based catalyst is used, a dehydration-condensing agent may be added to improve the reaction efficiency. A well-known dehydration-condensing agent may be used, and examples thereof include, but are not limited to, 1,1'-carbonyldiimidazole (CDI), N,N'-dicyclohexylcarbodiimide (DCC), N,N'-diisopropylcarbodiimide (DIC), 1-ethyl-3-(3-dimethylaminopropyl)-carbodiimide (EDC), 1-ethyl-3-(3-dimethylaminopropyl)-carbodiimide hydrochloride (EDC·HCl), and 1-[bis(dimethylamino)methylene]-1H-1,2,3-triazolo[4,5-b]pyridinium 3-oxide hexafluorophosphate (HATU).

When the reaction of the polymerizable monomer and the poly-ε-caprolactone-modified polyether is a urethanization reaction, a catalyst may be used. Examples of the catalyst used for the urethanization reaction include: amines such as triethylamine, triethylenediamine, pentamethylenediethylenetriamine, N,N-dimethylethanolamine, 1,4-diazabicyclo(2,2,2)octane (DABCO), pyridine, and N,N,N',N'-tetramethyl-1,3-propanediamine (TMPDA); organotin compounds such as di-n-butyltin laurate, diisobutyltin oxide, dibutyltin diacetate, dibutyltin dilaurate (DBTL), and dioctyltin dineodecanoate; organotitanium compounds such as tetramethoxytitanium, tetraethoxytitanium, tetra-n-propoxytitanium, tetrabutoxytitanium, tetrakis(octyloxy)titanium, titanium acetylacetonate, titanium tetraacetylacetonate, a titanium dodecylbenzene sulfonate compound, a titanium phosphate complex, titanium triethanolaminate, and titanium diisopropoxy bis(ethylacetoacetate); organozirconium compounds such as n-propyl zirconate, n-butyl zirconate, zirconium tetraacetylacetonate, zirconium dibutoxy bis(ethylacetoacetate), and a zirconium octylate compound; and organoiron compounds such as tris(2,4-pentanedionato)iron(III).

The amount of the catalyst added when the polymerizable monomer having a radical-polymerizable unsaturated group is introduced may be in the range of 1 to 10,000 ppm and is preferably 10 to 1,000 ppm based on the total amount of the polymerizable monomer.

In the reaction described above, a polymerization inhibitor or an antioxidant may be used for the purpose of inhibiting the polymerization reaction of (meth)acrylate groups during the reaction.

Examples of the polymerization inhibitor and the antioxidant include, but are not limited to, hydroquinone, p-methoxyphenol, 2,6-di-tert-butyl-p-cresol, 2,4-dimethyl-6-t-butylphenol, p-benzoquinone, dibutylhydroxytoluene, 2,5-dihydroxy-p-benzoquinone, and mequinol.

When a carboxy-modified polyether is used as a starting material, the polyester-polyether copolymer can be produced by a production method in which the carboxy-modified polyether and poly-ε-caprolactone-modified (meth) acrylate represented by formula (9) below are subjected to an esterification reaction.

Commercial examples of the poly-ε-caprolactone-modified (meth)acrylate include PLACCEL FA2D, PLACCEL FA10L, PLACCEL FN2D, and PLACCEL FM4 (manufactured by Daicel Corporation).

[Chem. 10]

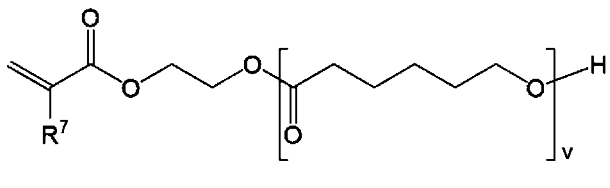

- (9)

In the general formula (9), $R^7$ is a hydrogen atom or a monovalent hydrocarbon group having 1 to 3 carbon atoms and preferably a hydrogen atom or a methyl group. v satisfies $1 \leq v \leq 50$ and preferably satisfies $1 \leq v \leq 30$.

Examples of the method for producing the polyester-polyether copolymer include, but are not limited to, the following method.

1.0 to 1.25 moles (functional group equivalent ratio) of the poly-ε-caprolactone-modified (meth)acrylate (formula (9)) and 0.1 to 5.0 moles of an esterification catalyst are added relative to 1.0 moles of carboxy groups in the carboxy-modified polyether and mixed therewith, and the mixture is stirred at 15 to 150°C for 10 to 30 minutes. Then 1.0 to 1.25 moles of a dehydration-condensing agent is optionally added, and the resulting mixture is allowed to react at 15 to 150°C for 4 to 20 hours.

After the reaction, the crude product is subjected to filtration, washing with water, and/or adsorption treatment to remove by-products. Finally, the solvent is removed by evaporation, and an acrylic-modified polyester (poly-ε-caprolactone)-polyether copolymer can thereby be obtained.

The obtained polyester-polyether copolymer having at least two radical-polymerizable unsaturated groups per molecule is preferably liquid, and its weight average molecular weight (Mw) measured by gel permeation chromatography (GPC) is preferably in the range of 100 to 100,000 and is more preferably 500 to 50,000.

If the weight average molecular weight is less than the above-mentioned lower limit, the crosslinking density of the elastomer in the obtained spherical elastomer/elastomer composite particles is high, and degradability may deteriorate, which is undesirable. If the weight average molecular weight is larger than the above-mentioned upper limit, the viscosity of the copolymer is high, and it may be difficult to prepare the spherical elastomer particles.

In the filtration step, a dilution operation using a hydrophobic organic solvent may be performed for the purpose of adjusting the viscosity of the crude reaction product.

No particular limitation is imposed on the hydrophobic organic solvent used. From the viewpoint of the ability to dissolve the polyester-polyether copolymer and the affinity therefor, toluene, hexane, ethyl acetate, etc. are preferred.

The adsorption step is performed for the purpose of removing hydrochlorides uncapable of being removed by washing with water or for the purposes of dehydration, decolorization, and deodorization.

A well-known adsorbent may be used, and a combination of a plurality of adsorbents may be used. Preferred examples of the adsorbent include desiccants such as magnesium sulfate and sodium sulfate, activated carbon, silica gel, and the KYOWAAD series (manufactured by Kyowa Chemical Industry Co., Ltd.).

Spherical elastomer particles can be produced, for example, by a method including steps i) to iii) described later using the copolymer having the polyester structure and polyether structure and produced by the above-described method.

- Polyorganosilsesquioxane

In the present invention, the polyorganosilsesquioxane present on the surfaces of the spherical elastomer particles is a resin-like solid material in which units represented by $R^7SiO_{3/2}$ are crosslinked to form a three-dimensional network.

$R^7$ in the above formula is an unsubstituted or substituted monovalent hydrocarbon group having 1 to 20 carbon atoms. Examples of $R^7$ include: alkyl groups such as a methyl group, an ethyl group, a propyl group, a butyl group, a pentyl

group, a hexyl group, a heptyl group, an octyl group, a decyl group, an undecyl group, a dodecyl group, a tetradecyl group, a pentadecyl group, a hexadecyl group, a heptadecyl group, an octadecyl group, a nonadecyl group, and an icosyl group; alkenyl groups such as a vinyl group and an allyl group; aryl groups such as a phenyl group, a tolyl group, and a naphthyl group; aralkyl groups such as a benzyl group and a phenethyl group; cycloalkyl groups such as a cyclopentyl group, a cyclohexyl group, and a cycloheptyl group; and hydrocarbon groups obtained by substituting some or all of hydrogen atoms bonded to carbon atoms in any of the above groups with atoms such as halogen atoms (fluorine atoms, chlorine atoms, bromine atoms, or iodine atoms) and/or substituents such as amino groups, acryloyloxy groups, methacryloyloxy groups, epoxy groups, glycidoxy groups, mercapto groups, or carboxyl groups.

To allow the polyorganosilsesquioxane to adhere to the surfaces of the spherical elastomer particles using the production method of the invention described later, it is preferable that at least 50% by mole of $R^7$s are methyl groups, vinyl groups, or phenyl groups, and it is more preferable that at least 80% by mole of $R^7$s are methyl groups, vinyl groups, or phenyl groups. It is still more preferable that at least 90% by mole of $R^7$s are methyl groups, vinyl groups, or phenyl groups.

The polyorganosilsesquioxane may include at least one type of units selected from $R^7{}_2SiO_{2/2}$ units, $R^7{}_3SiO_{1/2}$ units, and $SiO_{4/2}$ units in addition to the $R^7SiO_{3/2}$ units, so long as the characteristics of the elastomer composite particles to be obtained such as non-cohesiveness and dispersiveness, textures such as a dry feel and a smooth feel, and a soft feel are not impaired.

In the above polyorganosilsesquioxane, the content of the $R^7SiO_{3/2}$ units with respect to the total amount of siloxane units is preferably 70 to 100% by mole and more preferably 80 to 100% by mole.

- Silica

In the present invention, silica present on the surfaces of the spherical elastomer particles is an inorganic solid material in which units represented by $R^8SiO_{4/2}$ are crosslinked to form a three-dimensional network.

$R^8$ in the above formula is an unsubstituted or substituted monovalent hydrocarbon group having 1 to 6 carbon atoms. Examples of $R^8$ include a methyl group, an ethyl group, a propyl group, a butyl group, a pentyl group, and a hexyl group.

Silica is obtained by a hydrolysis-polycondensation reaction of tetraalkoxysilane and is composed mainly of $SiO_2$ units.

Silica may contain not only structures composed only of $SiO_2$ units but also alkoxy groups derived from tetraalkoxysilane used as the raw material as well as silanol groups not subjected to the condensation reaction.

In the present invention, the shape of the polyorganosilsesquioxane or silica is preferably spherical.

The particle diameters of the polyorganosilsesquioxane and silica are each preferably 10 to 500 nm and more preferably 20 to 200 nm.

If the particle diameters of the polyorganosilsesquioxane and silica are each smaller than 10 nm, the ability of the elastomer composite particles to be obtained to scatter light may deteriorate. If the particle diameters of the polyorganosilsesquioxane and silica are each larger than 500 nm, the elastomer composite particles to be obtained lack a soft feel, and their ability to scatter light may deteriorate.

The polyorganosiloxane or silica may adhere to only part of the surfaces of the spherical elastomer particles or may adhere to the entire particle surfaces, i.e., may coat the entire particle surfaces. It is preferable that the entire surfaces of the spherical elastomer particles are coated, with substantially no regions remaining uncoated.

The particle diameters and shapes of the polyorganosilsesquioxane and silica and their adhesion densities on the surfaces of the spherical elastomer particles can be determined by observing the surfaces of the obtained elastomer composite particles using an electron microscope. The diameter of the polyorganosilsesquioxane or silica refers to a value obtained in a manner in which 50 particles are randomly selected from an electron microscope photograph of the surfaces of the obtained elastomer composite particles and their particle diameters are measured to calculate the average value.

In the elastomer composite particles of the invention, the amount of the polyorganosilsesquioxane or silica adhering to the surfaces of the spherical elastomer particles is preferably 0.5 to 200 parts by mass and more preferably 1.0 to 50 parts by mass based on 100 parts by mass of the spherical elastomer particles.

If the amount of the polyorganosilsesquioxane or silica is less than the above-mentioned lower limit, the cohesiveness is high, and the dispersibility is low. Moreover, the ability to scatter light may deteriorate, and the elastomer composite particles may lack a dry feel. If the amount of the polyorganosiloxane or silica is more than the above-mentioned upper limit, the elastomer composite particles may lack a soft feel.

[Methods for producing spherical elastomer particles / elastomer composite particles]

The spherical elastomer particle production method of the invention includes the steps i) to iii) of:

i) stirring and suspending components (A), (B), (C), and (D) shown below to prepare a suspension composition, said

components defined as:

(A) a copolymer having a polymerizable group and having a polyester structure and a polyether structure,
(B) an oil phase component or an aqueous phase component in which the component (A) is insoluble or poorly soluble,
(C) a suspending agent, and
(D) a polymerization initiator;

ii) subjecting the component (A) in the suspension composition obtained through the step i) to radical polymerization to thereby obtain a spherical elastomer particle dispersion; and
iii) removing the component (B) present as a continuous phase from the spherical elastomer particle dispersion obtained through the step ii) by washing and drying to thereby obtain spherical elastomer particles.

The elastomer composite particles of the invention can be produced, for example, by a method including the following step iv) of:
iv) adding component (I) to a liquid phase, containing components (E), (F), (G), and (H) to subject the component (I) to a hydrolysis-polymerization reaction, said components defined as:

(E) the spherical elastomer particles produced through the steps i) to ii) or the steps i) to iii), the spherical elastomer particles having a volume average particle diameter of 0.5 to 200 μm, the spherical elastomer particles being crosslinked particles of the copolymer having the polyester structure and the polyether structure,
(F) an alkaline material,
(G) at least one selected from a cationic surfactant and a cationic water-soluble macromolecular compound,
(H) water, and
(I) trialkoxysilane or tetraalkoxysilane.

Specifically, the elastomer composite particle production method of the invention can roughly be divided into two stages of: the steps i) to iii) of producing the spherical elastomer particles; and the step iv) of complexing the spherical elastomer particles. Each of the steps will be described below.
Depending on the intended application, a water dispersion of the elastomer composite particles obtained through the step iv) may be used as-is or may be subjected to a dehydration step of removing water and a powdering step to prepare an elastomer composite particle powder for desired use.

- Process of producing spherical elastomer particles

The spherical elastomer particles included in the elastomer composite particles of the invention are a polymer (crosslinked particles) obtained by a radical polymerization reaction of the polyester-polyether copolymer described above and are produced by the production method including the following steps i) to iii).

Step i)

In the step i), the components (A), (B), (C), and (D) shown below are stirred and suspended to prepare a suspension composition.
The components used in the step i) are as follows.
The component (A) is a copolymer having a polymerizable group and having a polyester structure and a polyether structure and is preferably a polyester-polyether copolymer having a radical-polymerizable unsaturated group.
The constitutional units of the elastomer composite particles of the invention are derived from the copolymer having a polyester structure and a polyether structure, and the above-described polyester-polyether copolymer having at least two radical-polymerizable unsaturated groups per molecule can be preferably used.
Specific examples of the component (A) include the polyester-polyether copolymers represented by the general formulas (1) and (2) described above. The component (A) is more preferably the polyester-polyether copolymer represented by the general formula (5) or (6) described above.
The content of the component (A) in the suspension composition prepared in the step i) is preferably 1.0 to 80 parts by mass based on 100 parts by mass of the composition. If the amount of the component (A) is less than the above-mentioned lower limit, the production efficiency may deteriorate. If the amount of the component (A) is more than the above-mentioned upper limit, the degree of suspension is insufficient, and in this case, it may be difficult to obtain the dispersion of the spherical elastomer particles, which is undesirable.
The component (B) forms a continuous phase in the suspension composition and is an oil phase component or an

aqueous phase component in which the component (A) is insoluble or poorly soluble.

When the component (B) is an aqueous phase component, specific examples of the water contained in the aqueous phase component include distilled water, ion exchanged water, pure water, and ultrapure water.

An additive may be optionally added to the aqueous phase component, so long as the function of the continuous phase is not impaired. Specific examples of the additive include, but are not limited to, a preservative, salts, a pH modifier, a chelating agent, vitamins, amino acids, a moisturizing agent, and an antioxidant. To adjust the composition of the aqueous phase component such that the component (A) is insoluble or poorly soluble, the content of water in the aqueous phase component is preferably 90 to 100% by mass.

When the component (B) is an oil phase component, examples of the oil phase component include, but are not limited to, silicone oils, hydrocarbon oils, higher fatty acids, ester oils, and liquid fats and oils. One of them may be used alone, or an appropriate combination of two or more may be used.

Examples of the silicone oil include dimethylpolysiloxane, methylhydrogenpolysiloxane, methylphenylpolysiloxane, octamethylsiloxane, decamethyltetrasiloxane, decamethylcyclopentasiloxane, hexamethylcyclotrisiloxane, and octamethylcyclotetrasiloxane.

Examples of the hydrocarbon oil include liquid paraffin, $\alpha$-olefin oligomers, isododecane, isohexadecane, squalane, ozokerite, squalene, ceresin, paraffin, isoparaffin, paraffin wax, polyethylene wax, polyethylene-polypropylene wax, pristane, polyisobutylene, Vaseline, and microcrystalline wax.

Examples of the higher fatty acid include lauric acid, myristic acid, palmitic acid, stearic acid, behenic acid, undecylenic acid, oleic acid, linoleic acid, linolenic acid, arachidonic acid, eicosapentaenoic acid (EPA), docosahexaenoic acid (DHA), isostearic acid, and 12-hydroxystearic acid.

Examples of the ester oil include isopropyl myristate, cetyl octanoate, octyldodecyl myristate, isopropyl palmitate, butyl stearate, hexyl laurate, myristyl myristate, decyl oleate, hexyldecyl dimethyloctanoate, cetyl lactate, myristyl lactate, acetylated lanolin, isocetyl stearate, isocetyl isostearate, isononyl isononanoate, cholesteryl 12-hydroxystearate, ethylene glycol di-2-ethylhexanoate, dipentaerythritol fatty acid ester, N-alkyl glycol monoisostearate, neopentyl glycol dicaprate, diisostearyl malate, glycerin di-2-heptylundecanoate, trimethylolpropane tri-2-ethylhexanoate, trimethylolpropane triisostearate, pentaerythritol tetra-2-ethylhexanoate, glycerin tri-2-ethylhexanoate, glycerin trioctanoate, glycerin triisopalmitate, trimethylolpropane triisostearate, cetyl 2-ethylhexanoate, 2-ethylhexyl palmitate, glycerin trimyristate, glyceride tri-2-heptylundecanoate, castor oil fatty acid methyl ester, oleyl oleate, acetoglyceride, 2-heptylundecyl palmitate, diisobutyl adipate, N-lauroyl-L-glutamic acid-2-octyldodecyl ester, di-2-heptylundecyl adipate, ethyl laurate, di-2-ethylhexyl sebacate, 2-hexyldecyl myristate, 2-hexyldecyl palmitate, 2-hexyldecyl adipate, diisopropyl sebacate, 2-ethylhexyl succinate, and triethyl citrate.

Examples of the liquid fats and oils include avocado oil, camellia oil, turtle oil, macadamia nut oil, corn oil, mink oil, olive oil, rape oil, egg yolk oil, sesame oil, persic oil, wheat germ oil, sasanqua oil, castor oil, linseed oil, safflower oil, cottonseed oil, perilla oil, soybean oil, peanut oil, tea seed oil, kaya oil, rice bran oil, Chinese tung oil, Japanese tung oil, jojoba oil, germ oil, and triglycerin.

The kinematic viscosity of the component (B) at 25°C is preferably 100,000 $mm^2/s$ or less and more preferably 10,000 $mm^2/s$ or less. If the kinematic viscosity is larger than the above-mentioned upper limit, it is difficult to suspend the components in the step i), and obtaining a suspension composition with a narrow particle size distribution and spherical elastomer particles may also be difficult.

Examples of the component (C) used as a suspending agent include: well-known water-soluble macromolecular compounds such as natural macromolecular compounds, semi-synthetic macromolecular compounds, and synthetic macromolecular compounds; and macromolecular compounds used as thickeners. One of them may be used alone, or an appropriate combination of two or more may be used.

Examples of the natural macromolecular compound include xanthan gum, cellulose, tamarind gum, tamarind seed gum, locust bean gum, gellan gum, HM pectin, carrageenan, guar gum, linseed gum, gum arabic, pullulan, agarose, agaropectin, alginic acid, karaya gum, succinoglycan, starch, dextrin, gelatin, and casein.

Examples of the semi-synthetic macromolecular compound include methyl cellulose, ethyl cellulose, hydroxyethyl cellulose, hydroxypropyl cellulose, hydroxypropyl methyl cellulose, carboxymethyl cellulose, cationic xanthan gum, LM pectin (acid treated/alkali treated), cationic guar gum, alginates, soluble starch, and cellulose nanofibers.

Examples of the synthetic macromolecular compound include polyvinyl alcohol, polyvinyl methyl ether, polyvinylpyrrolidone, carboxyvinyl polymers, polyacrylic acids, sodium polyacrylate, ammonium polyacrylate, polyacrylamide, polyethylene glycol, polypropylene glycol, and polyethylene-polypropylene glycol.

The component (C) is preferably xanthan gum, tamarind gum, carrageenan, guar gum, gum arabic, methyl cellulose, ethyl cellulose, hydroxyethyl cellulose, hydroxypropyl cellulose, hydroxypropyl methyl cellulose, carboxymethyl cellulose, cationic xanthan gum, cationic guar gum, polyvinyl alcohol, or polyvinylpyrrolidone because the component (A) can be suspended using a small amount of the component (C) and fine spherical elastomer particles can be obtained.

The amount of the component (C) added is preferably 0.01 to 25 parts by mass and more preferably 0.05 to 15 parts by mass based on 100 parts by mass of the suspension composition. If the amount added is less than the above-mentioned lower limit, emulsification may be insufficient, or fine spherical elastomer particles may not be obtained, which is undesirable. If the amount added is larger than the above-mentioned upper limit, the viscosity of the composition increases significantly. In this case, fine spherical elastomer particles may not be obtained, and the degree of dispersion of the particles may be insufficient, which is undesirable.

The component (D) used as a polymerization initiator may be a well-known radical polymerization initiator. By applying an external stimulus such as heat, light irradiation, or UV irradiation in the presence of the polymerization initiator to generate radicals, the reaction and curing (crosslinking) proceed.

Specific examples of the polymerization initiator (D) for use therein include peroxides, azo-based initiators, photo-initiators, and redox-based initiators obtained by combining an oxidizing agent and a reducing agent.

Examples of the peroxide include benzoyl peroxide, 2,4-dichlorobenzoyl peroxide, o-methylbenzoyl peroxide, p-methylbenzoyl peroxide, 2,4-dicumyl peroxide, 2,5-dimethyl-2,5-di(t-butylperoxy)hexane, di-t-butyl peroxide, t-butylperbenzoate, and hydrogen peroxide.

Perchlorates such as potassium perchlorate and sodium perchlorate may also be used.

Examples of the azo-based initiator include 2,2'-azobis-isobutyronitrile, 2,2'-azobis-(2-methylbutyronitrile), 2,2'-azobis-(2,4-dimethylvaleronitrile), dimethyl 2,2'-azobis-(2-methylpropionate), dimethyl 2,2'-azobis-isobutyrate, t-butylperoxy-2-ethylhexanoate, and 2,2-azobis-(2-aminodipropane)dihydrochloride.

Examples of the photo-initiator include 2,2-diethoxyacetophenone, 2,2-dimethoxy-1,2-diphenylethan-1-one, 1-hydroxy-cyclohexyl phenyl ketone, 2-hydroxy-2-methyl-1-phenylpropan-1-one, 2-hydroxy-1-{4-[4-(2-hydroxy-2-methylpropionyl)benzyl]phenyl}-2-methylpropan-1-one, phenylglyoxylic acid methyl ester, 2-methyl-1-[4-(methylthio)phenyl]-2-morpholinopropan-1-one, 2-benzyl-2-dimethylamino-1-(4-morpholinophenyl)-1-butanone, bis(2,4,6-trimethylbenzoyl)-phenylphosphine oxide, and (2,4,6-trimethylbenzoyl)-diphenylphosphine oxide.

Benzoin alkyl ethers such as benzoin methyl ether, benzoin ethyl ether, benzoin isopropyl ether, and benzoin isobutyl ether may also be used.

Examples of the redox-based initiator include a combination of ferrous sulfate/sodium pyrophosphate/glucose/hydroperoxide and a combination of ferrous sulfate/ethylenediaminetetraacetic acid disodium salt/Rongalite/hydroperoxide.

The redox-based initiator may be used in combination with an azo-based initiator or a photo-initiator.

In terms of the stability during the (radical) polymerization reaction of the suspension composition and ease of handling, the polymerization initiator is preferably a peroxide, an azo-based initiator, or a photo-initiator used for a heating method or a light irradiation method.

The amount of the polymerization initiator added is preferably in the range of 0.01 to 5.0 parts by mass based on 100 parts by mass of the component (A).

If the amount of the polymerization initiator added is less than the above-mentioned lower limit, curing (crosslinking) may be insufficient. If the amount of the polymerization initiator added is larger than the above-mentioned upper limit, reaction residues (contaminations) may be mixed, and this may cause odor, bleeding, etc., which is undesirable.

Further additives

In the elastomer composite particle production method of the invention, when the suspension composition is prepared in the step i), various different additives may be optionally added in addition to the components (A), (B), (C), and (D).

Examples of the additive include a thickener, a pH modifier, a preservative, an antioxidant, and a polymerization inhibitor. For each of them, one type may be used alone, or an appropriate combination of two or more types may be used. They may be used in appropriate amounts so long as the effects of the invention are not impaired.

No particular limitation is imposed on the order of addition/mixing of the components in the step i). For example, the component (A) and the component (D) may be mixed in advance, and then the component (B) and the component (C) may be added thereinto to prepare a suspension composition. Alternatively, the component (A), the component (B), and the component (C) may be used to prepare a suspension composition, and then the component (D) may be added thereinto.

Alternatively, after the preparation of a suspension composition using the component (A), the component (B), the component (C), and the component (D), the component (B) may be further added for dilution before the step ii) such that the desired concentration is obtained.

When the component (A), i.e., the polyester-polyether copolymer having radical-polymerizable unsaturated groups, has temperature-dependent characteristics such as a cloudy point (i.e., when the component (A) exhibits a rapid decrease in solubility at a specific temperature during heating and phase separation occurs), the suspension composition is prepared in the step i) at a temperature adjusted according to the temperature characteristics of the component (A). For example, stirring and suspension may be performed at an increased temperature under heating.

As for the temperature conditions at an increased temperature under heating, the temperature is, for example,

100°C or lower, preferably 30 to 90°C, and still more preferably in the range of 40 to 70°C. When the continuous phase is an aqueous phase component, if the increased temperature during the heating is higher than the above-mentioned upper limit, evaporation of water and bumping may occur, which is undesirable.

To prepare the suspension composition in the step i), a well-known emulsification/dispersion machine may be used. Typical examples of the emulsification/dispersion machine include a high-speed rotary shear-type agitator such as a homogenizing mixer, a high-speed centrifugal radiation-type agitator such as a homogenizing disper, a combi mix emulsification/dispersion machine that is a combination of a homogenizing mixer and a homogenizing disper, a mixing/emulsifying/agitating machine (agi-homo mixer) that is a combination of a homogenizing mixer or a homogenizing disper with an anchor mixer, a high-pressure injection-type emulsification/dispersion machine such as a homogenizer, a colloid mill, an ultrasonic emulsifying machine, and a propeller stirrer.

Step ii)

The step ii) is a step of subjecting the component (A) in the suspension composition prepared in the step i) to a reaction and curing (crosslinking) through (radical) polymerization to thereby obtain a spherical elastomer particle dispersion.

In the step ii), the polymerization reaction conditions can be appropriately determined according to the type of the polymerization initiator (D).

When, for example, a peroxide or an azo-based initiator is used, a heating method in which the reaction is allowed to proceed at a temperature of 30 to 80°C for 10 to 24 hours may be used. When a redox-based initiator is used, a redox method in which the reaction is allowed to proceed at a temperature of 30 to 70°C for 2 to 24 hours may be used. When a photo-initiator is used, a light irradiation method is used in which the reaction is allowed to proceed under light irradiation. A well-known light source may be used for light or UV irradiation, and a well-known wavelength range may be used.

Step iii)

The step iii) is a step of removing the component (B) present as a continuous phase from the spherical elastomer particle dispersion obtained in the step ii) by washing and drying to thereby obtain spherical elastomer particles.

Specific examples of the method for the step iii) when the component (B) present as a continuous phase (dispersion medium) is an aqueous phase component include: a method including concentrating the dispersion by thermal dehydration, (pressure) filtration, centrifugal separation, decantation, etc., optionally adding pure water etc. to perform washing with water, and finally heat-drying the resulting product at normal pressure or under reduced pressure; a method including spraying the dispersion into a heated airflow to perform heat-drying (spray drying); a method using a circulating heating medium to perform heat drying; and a freeze-drying method including freezing the dispersion and then reducing the pressure to remove the dispersion medium. By using any of the above methods, the spherical elastomer particles are obtained. When the spherical elastomer particles obtained by removing the dispersion medium by washing and drying are aggregated, the aggregated particles may be pulverized using a mortar, a ball mill, a jet mill, etc.

When the component (B) present as a continuous phase (dispersion medium) is an oil phase component, specific methods for performing the step iii) include a method in which, for example, a hydrophobic organic solvent is added to the spherical elastomer particle dispersion, and the mixture is stirred for a predetermined time and then subjected to pressure filtration to thereby remove the component (B) by washing and perform solvent replacement. By repeating this washing procedure a plurality of times, the component (B) can be removed sufficiently, and the solvent replacement can be completed. Examples of the hydrophobic organic solvent used for this procedure include toluene and hexane. Finally, a method to perform heat-drying at normal pressure or under reduced pressure, a method to spray the dispersion into a heated airflow to perform heat-drying (spray drying), a method using a circulating heating medium to perform heat drying, or a freeze-drying method to freeze the dispersion and then reduce the pressure to remove the dispersion medium may be performed to obtain the spherical elastomer particles.

The spherical elastomer particles produced by the method including the steps i) to iii) are fine particles having a volume average particle diameter within the range of 0.5 to 200 $\mu$m and preferably within the range of 1.0 to 50 $\mu$m. Therefore, the spherical elastomer particles obtained by the spherical elastomer particle production method of the invention can be particularly preferably used to produce the elastomer composite particles of the invention.

- Process of producing elastomer composite particles (resin- or silica-coated spherical elastomer particles)

Step iv)

The step iv) is a step of adding component (I) shown below to a liquid phase containing components (E), (F), (G), and (H) shown below to subject the component (I) to a hydrolysis-polymerization reaction.

The component (E) is spherical elastomer particles, and the spherical elastomer particles obtained through the steps i) to ii) or i) to iii) described above are used as the component (E).

When the component (B) used in the step i) is an aqueous phase component, the water dispersion of the spherical elastomer particles obtained through the steps i) and ii) without performing the step iii) may be used in the step iv) as a mixture of the components (E) and (H).

The amount of the spherical elastomer particles (E) is preferably in the range of 1.0 to 150 parts by mass and more preferably in the range of 3.0 to 70 parts by mass based on 100 parts by mass of water (H) in the liquid phase containing (E) to (H). If the amount of the component (E) is less than the above-mentioned lower limit, the production efficiency of the target elastomer composite particles may deteriorate. If the amount of the component (E) is larger than the above-mentioned upper limit, it is difficult to coat the surfaces of the spherical elastomer particles with polyorganosilsesquioxane or silica, and aggregation and fusion of the particles may occur, which is undesirable.

The alkaline material (F) functions as a catalyst for the hydrolysis-polycondensation reaction of trialkoxysilane or tetraalkoxysilane. One alkaline material may be used alone, or an appropriate combination of two or more alkaline materials may be used.

No particular limitation is imposed on the alkaline material. Examples of the alkaline material that can be used include: alkali metal hydroxides such as potassium hydroxide, sodium hydroxide, and lithium hydroxide; alkaline-earth metal hydroxides such as calcium hydroxide and barium hydroxide; alkali metal carbonates such as potassium carbonate and sodium carbonate; ammonia; tetraalkylammonium hydroxides such as tetramethylammonium hydroxide and tetraethylammonium hydroxide; and amines such as monomethylamine, monoethylamine, monopropylamine, monobutylamine, monopentylamine, dimethylamine, diethylamine, trimethylamine, triethanolamine, and ethylenediamine. One of these alkaline materials may be used alone, or an appropriate combination of two or more may be used.

The alkaline material is most preferably ammonia because it can be easily removed by volatilization from the obtained elastomer composite particle powder. The ammonia used may be any of various commercial aqueous ammonia solutions with different concentrations.

The amount of the alkaline material (F) added is adjusted such that the pH of the liquid phase containing the components (E) to (H) at 25°C is preferably 9.0 to 13.0 and more preferably 10.0 to 12.0. By adding the alkaline material (F) in such an amount that the pH is 9.0 to 13.0, the hydrolysis-polycondensation reaction of trialkoxysilane or tetraalkoxysilane proceeds sufficiently, and the surfaces of the spherical elastomer particles are coated sufficiently with the resin or silica.

The cationic surfactant and the cationic water-soluble macromolecular compound both used as the component (G) have the function of facilitating the condensation reaction of the hydrolyzed trialkoxysilane or tetraalkoxysilane to generate the resin or silica. They also have the function of allowing the generated resin or silica to adhere to the surfaces of the spherical elastomer particles. One cationic surfactant or one cationic water-soluble macromolecular compound may be used alone, or an appropriate combination of two or more may be used.

Examples of the cationic surfactant include alkyltrimethylammonium salts, dialkyldimethylammonium salts, polyoxyethylene alkyldimethylammonium salts, dipolyoxyethylene alkylmethylammonium salts, tripolyoxyethylene alkylammonium salts, alkylbenzylmethylammonium salts, alkylpyridinium salts, monoalkylamine salts, and monoalkylamidoamine salts.

Examples of the cationic water-soluble macromolecular compound include polymers of dimethyldiallylammonium chloride, polymers of vinylimidazoline, polymers of methylvinylimidazolium chloride, polymers of ethyl acrylate trimethylammonium chloride, polymers of ethyl methacrylate trimethylammonium chloride, polymers of acrylamidopropyltrimethylammonium chloride, polymers of methacrylamidopropyltrimethylammonium chloride, epichlorohydrin/dimethylamine polymers, polymers of ethyleneimine, quaternized products of ethyleneimine polymers, polymers of allylamine hydrochloride, polylysine, cationic starch, cationic cellulose, chitosan, their copolymers with a monomer having a nonionic group or an anionic group, and derivatives thereof.

The component (G) is preferably an alkyltrimethylammonium salt of a cationic surfactant and more preferably lauryltrimethylammonium salt or cetyltrimethylammonium salt.

The amount of the cationic surfactant and cationic water-soluble macromolecular compound added is preferably 0.01 to 2.0 parts by mass and more preferably in the range of 0.1 to 1.0 parts by mass based on 100 parts by mass of water in the liquid phase containing (E) to (H). If the amount of the component (G) added is less than the above-mentioned lower limit, some of the resin or silica generated may fail to cover the surfaces of the spherical elastomer particles. Similarly, if the amount of the component (G) added is larger than the above-mentioned upper limit, some of the resin or silica generated may fail to cover the surfaces of the spherical elastomer particles.

No particular limitation is imposed on the water (H). For example, purified water, ion exchanged water, pure water, etc. may be used. When the component (B) is an aqueous phase component and the water dispersion of the spherical elastomer particles obtained through the step ii) without performing the step iii) is used for the step iv), the water in the water dispersion and water optionally added are included in the water (H).

No particular limitation is imposed on the trialkoxysilane and tetraalkoxysilane both used as the component (I),

and a well-known material may be used. From the viewpoint of reactivity, methyltrimethoxysilane, methyltriethoxysilane, tetramethoxysilane, and tetraethoxysilane are preferred, and methyltrimethoxysilane and tetramethoxysilane are more preferred. In the tetraalkoxysilane used, part or all of the alkoxy groups may be hydrolyzed, or part of the alkoxy groups may be condensed.

The amount of the trialkoxysilane added is such that the amount of polyorganosilsesquioxane is preferably 1.0 to 50 parts by mass and more preferably 2 to 25 parts by mass based on 100 parts by mass of the spherical elastomer particles (E).

The amount of the tetraalkoxysilane added is such that the amount of silica is preferably 0.5 to 200 parts by mass and more preferably 1.0 to 50 parts by mass based on 100 parts by mass of the spherical elastomer particles (E).

Hydrolysis-polycondensation reaction

Trialkoxysilane or tetraalkoxysilane used as the component (I) is added to the liquid phase containing (E) to (H), and the mixture is subjected to a hydrolysis-polycondensation reaction.

Specifically, the spherical elastomer particles (E) are dispersed in the water (H), and the alkaline material (F) and at least one selected from the cationic surfactant and the cationic water-soluble macromolecular compound that are used as the component (G) are dissolved in the water dispersion. Then the trialkoxysilane or tetraalkoxysilane used as the component (I) is added to the water dispersion, and the mixture is subjected to hydrolysis and polycondensation. As a result of the hydrolysis and polycondensation, polyorganosilsesquioxane or silica, which is a condensation product of the trialkoxysilane or tetraalkoxysilane, adheres to the surfaces of the spherical elastomer particles, and the surfaces of the spherical elastomer particles are coated with the polyorganosilsesquioxane or silica.

Preferably, the trialkoxysilane or tetraalkoxysilane is added under stirring using a general stirrer such as propeller blades or flat blades. The trialkoxysilane or tetraalkoxysilane may be added all at once, but gradual addition is preferred. The time for adding is preferably in the range of 1 minute to 6 hours and more preferably 10 minutes to 3 hours.

The temperature of the liquid phase in this case is preferably 0 to 60°C and more preferably in the range of 0 to 40°C. When the temperature is within the above range, the polyorganosilsesquioxane or silica can adhere effectively to the surfaces of the spherical elastomer particles in the liquid phase to coat the surfaces.

After the addition of the trialkoxysilane or tetraalkoxysilane, the stirring is continued until the hydrolysis-polycondensation reaction is completed. To complete the hydrolysis-polycondensation reaction, the reaction may be performed at room temperature or may be performed at an increased temperature of about 40 to 100°C under heating, and an alkaline material may be optionally added.

Dehydration step - pulverization step

After the hydrolysis-polycondensation reaction in the step iv), water in the resulting water dispersion of the elastomer composite particles of the invention is optionally removed. To remove water, the water dispersion after the reaction may be heated at normal pressure or under reduced pressure.

Specifically, for example, a method to perform heat-drying at normal pressure or under reduced pressure, a method to spray the dispersion into a heated airflow to perform heat-drying (spray drying), a method using a circulating heating medium to perform heat drying, or a freeze-drying method to freeze the dispersion and then reducing the pressure to remove the dispersion medium may be performed to obtain the elastomer composite particles.

As a pretreatment step prior to the above procedure, the dispersion may be concentrated by thermal dehydration, filtration, centrifugal separation, decantation, etc. The water dispersion may be optionally washed with water or alcohol.

When the powder of the elastomer composite particles obtained by removing water from the water dispersion after the reaction is an aggregated powder, the aggregated powder may be pulverized using a pulverizer such as a jet mill, ball mill, or a hammer mill.

Examples

The present invention will next be described in more detail by way of working examples and comparative examples. However, the present invention is not limited to the following working examples.

In the following examples, "%" and "parts" used for concentrations and contents refers to those expressed as "% by mass" and "parts by mass," respectively, unless otherwise specified. The kinematic viscosity is a value measured at 25°C. In the following examples, the volume average particle diameters and aspect ratios of spherical elastomer particles and elastomer composite particles are values measured by the methods described above.

The hardness of a cured rubber product (elastomer) is a value measured according to The Society of Rubber Industry, Japan Standard (SRIS).

The molecular weight of a copolymer having a polyester structure and a polyether structure (a polyester-polyether copolymer having at least two radical-polymerizable unsaturated groups per molecule) is a weight average molecular weight (Mw.) measured by GPC using polystyrene as a reference material under the following conditions.

[Measurement conditions]

Eluent: Tetrahydrofuran (THF)
Flow rate: 0.60 mL/min.
Detector: Differential refractometer (RI)
Columns:

TSK Guardcolumn SuperH-H,
TSKgel SuperHM-N,
TSKgel SuperH2500 (all manufactured by TOSOH Corporation)

Column temperature: 40°C
Sample injection volume: 50 μL (THF solution with a concentration of 0.5% by mass)

[Method for measuring and evaluating biodegradability]

The biodegradability was measured by a method using activated sludge as a microbial (degradation) source according to OECD Guidelines for the Testing of Chemicals, No. 301F, July 17, 1992, "Ready Biodegradability: MANOMETRIC RESPIROMETRY TEST" and evaluated based on the degree of biodegradation. The activated sludge used was activated sludge from a municipal sewage treatment plant, and the concentration of suspended materials was 2,400 mg/L. Sodium benzoate was used as a reference (control) material.
To measure the degree of biodegradation, the consumption of oxygen (Biochemical Oxygen Demand (BOD)) in a closed system in an incubator was measured using a BOD meter, and the degree of biodegradation was calculated using the following formula.

$$\text{Degree of biodegradation (\%)} = \text{BOD - B / TOD} \times 100$$

BOD: Biochemical oxygen demand of test suspension or operation control (measured value: mg)
B: Average biochemical oxygen demand of plant-derived blank (measured value: mg)
TOD: Theoretical oxygen demand necessary to completely oxidize test substance or sodium benzoate (calculated value: mg)

[Synthesis of acrylic-modified poly-ε-caprolactone/polyether copolymer 1 - Synthesis example 1]

A 2 L separable flask equipped with a stirrer, a thermometer, a condenser tube, and a dropping funnel was charged with 500 g of end-primarized EO (ethylene oxide)/PO (propylene oxide) polyether (molecular weight: about 2,000, OH group equivalent: 0.09-0.10 mol/100 g), 183.6 g of ε-caprolactone (molecular weight: 114.1), and 350 g of dehydrated toluene, and the mixture was heated to 90°C in a nitrogen flow. After the target temperature was reached, 0.68 g of tetra-n-butoxytitanium (molecular weight 340.0) serving as a catalyst was added, and the resulting mixture was aged at 120°C for 4 to 6 hours.
Next, the poly-ε-caprolactone/polyether copolymer obtained through the above procedure was cooled to near room temperature, and then 60.7 g of triethylamine (molecular weight 101.2), 100 g of dehydrated toluene, and 0.22 g of dibutylhydroxytoluene (BHT) (molecular weight 220.4) serving as a polymerization inhibitor were added. The mixture was stirred for a predetermined time to achieve uniform dissolution, and 49.7 g of acryloyl chloride (molecular weight 90.5) was added dropwise using a dropping funnel. Once heat generation was detected, the mixture was aged at 60°C for 4 hours.
The obtained crude product was subjected to pressure filtration, to washing operation with an aqueous sodium chloride solution using a separatory funnel, and to centrifugation etc. Then magnesium sulfate, silica gel, activated carbon, etc. were added, and the resulting mixture was subjected to powder processing by shaking to remove impurities by adsorption. The powders were removed by pressure filtration, and 0.22 g of dibutylhydroxytoluene (BHT) was again added. Then the solvent was removed by evaporation under the conditions of 60 to 70°C and 50 mmHg or lower to thereby obtain an acrylic-modified poly-ε-caprolactone/polyether copolymer 1 (the following formula (11), weight average molecular weight: 2,880).

[Chem. 11]

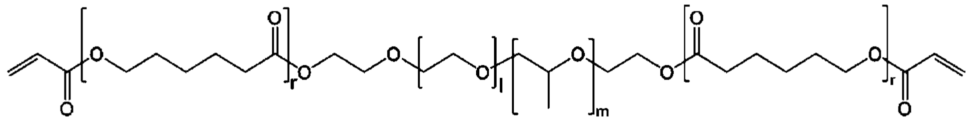

-(11)

(1 ≈ 12 to 14, m ≈ 22 to 26, r ≈ 3 to 4)

[Synthesis of acrylic-modified poly-ε-caprolactone/polyether copolymer 2 - Synthesis example 2]

A 1 L separable flask equipped with a stirrer, a thermometer, a condenser tube, and a dropping funnel was charged with 300 g of the same end-primarized EO/PO polyether as that in the synthesis example 1, 110.2 g of ε-caprolactone, and 200 g of dehydrated toluene, and the mixture was heated to 90°C in a nitrogen flow. After the target temperature was reached, 0.41 g of tetra-n-butoxytitanium serving as a catalyst was added, and the resulting mixture was aged at 120°C for 4 to 6 hours.

Next, the poly-ε-caprolactone/polyether copolymer obtained through the above procedure was cooled to near room temperature, and then 100 g of dehydrated toluene, 0.96 g of dioctyltin dineodecanoate (molecular weight: 687.7) serving as a catalyst, and 0.12 g of dibutylhydroxytoluene (BHT) were added. The mixture was stirred for a predetermined time to achieve uniform dissolution, and 44.4 g of 2-isocyanatoethyl acrylate (molecular weight: 141.1) was added dropwise using a dropping funnel. Once heat generation was detected, the mixture was aged at 60°C for 4 hours.

The obtained crude product was cooled to 40°C or lower, and then 0.8 g of ethanol was added and reacted with unreacted (remaining) isocyanate groups to perform quenching treatment. Then magnesium sulfate, silica gel, activated carbon, etc. were added, and the resulting mixture was subjected to powder processing by shaking to remove impurities by adsorption. The powders were removed by pressure filtration, and 0.12 g of dibutylhydroxytoluene (BHT) was again added, and the solvent was removed by evaporation under the conditions of 60 to 70°C and 50 mmHg or lower to thereby obtain an acrylic-modified poly-ε-caprolactone/polyether copolymer 2 (the following formula (12), weight average molecular weight: 3,120).

[Chem. 12]

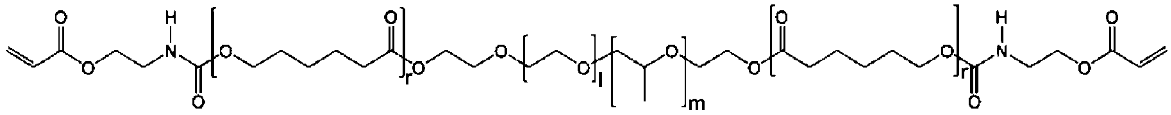

-(12)

(1 ≈ 12 to 14, m ≈ 22 to 26, r ≈ 3 to 4)

[Synthesis of acrylic-modified poly-ε-caprolactone/polyether copolymer 3 - Synthesis example 3]

A 1 L separable flask equipped with a stirrer, a thermometer, a condenser tube, and a dropping funnel was charged with 300 g of end-primarized EO/PO polyether (molecular weight: about 2,600, OH group equivalent: 0.09 to 0.10 mol/100 g), 115.2 g of ε-caprolactone, and 200 g of dehydrated toluene, and the mixture was heated to 90°C in a nitrogen flow. After the target temperature was reached, 0.42 g of tetra-n-butoxytitanium serving as a catalyst was added, and the resulting mixture was aged at 120°C for 4 to 6 hours.

Next, the poly-ε-caprolactone/polyether copolymer obtained through the above procedure was cooled to near room temperature, and then 70 g of dehydrated toluene, 0.18 g of tris(2,4-pentanedionato)iron(III) (also known as iron(III) acetylacetonate, molecular weight: 353.2), and 0.13 g of dibutylhydroxytoluene (BHT) were added. The mixture was stirred for a predetermined time to achieve uniform dissolution, and 46.4 g of 2-isocyanatoethyl acrylate was added dropwise using a dropping funnel. Once heat generation was detected, the mixture was aged at 60°C for 4 hours.

The obtained crude product was subjected to post-treatment and purification treatment using the same method as described in the synthesis example 2 to thereby obtain an acrylic-modified poly-ε-caprolactone/polyether copolymer 3. The acrylic-modified poly-ε-caprolactone/polyether copolymer 3 has the structure shown in the formula (12), wherein, in the formula (12), 1 ≈ 18 to 21, m ≈ 34 to 38, and r ≈ 3 to 4, and the weight average molecular weight was 4,870.

[Synthesis of acrylic-modified poly-ε-caprolactone/polyether copolymer 4 - Synthesis example 4]

A 1 L separable flask equipped with a stirrer, a thermometer, a condenser tube, and a dropping funnel was charged with 300 g of the same end-primarized EO/PO polyether as that used in the synthesis example 3, 115.2 g of ε-caprolactone, and 200 g of dehydrated toluene, and the mixture was heated to 90°C in a nitrogen flow. After the target temperature was reached, 0.42 g of tetra-n-butoxytitanium serving as a catalyst was added, and the resulting mixture was aged at 120°C for 4 to 6 hours.

Next, the poly-ε-caprolactone/polyether copolymer obtained through the above procedure was cooled to near room temperature, and 70 g of dehydrated toluene, 2.77 g of zirconium tetraacetylacetonate (molecular weight: 487.7) serving as a catalyst, and 0.13 g of dibutylhydroxytoluene (BHT) were added. The mixture was stirred for a predetermined time to achieve uniform dissolution, and 46.4 g of 2-isocyanatoethyl acrylate was added dropwise using a dropping funnel. Once heat generation was detected, the mixture was aged at 60°C for 4 hours.

The obtained crude product was subjected to post-treatment and purification treatment using the same method as described in the synthesis example 2 to thereby obtain an acrylic-modified poly-ε-caprolactone/polyether copolymer 4. The acrylic-modified poly-ε-caprolactone/polyether copolymer 4 had the structure shown in the formula (12), wherein, in the formula (12), 1 ≈ 18 to 21, m ≈ 34 to 38, and r ≈ 3 to 4, and the weight average molecular weight was 4,990.

[Synthesis of acrylic-modified poly-ε-caprolactone/polyether copolymer 5 - Synthesis example 5]

A 1 L separable flask equipped with a stirrer, a thermometer, a condenser tube, and a dropping funnel was charged with 300 g of end-primarized EO/PO polyether (molecular weight: about 3,200, OH group equivalent: 0.062 mol/100 g), 106.3 g of ε-caprolactone, and 200 g of dehydrated toluene, and the mixture was heated to 90°C in a nitrogen flow. After the target temperature was reached, 0.41 g of tetra-n-butoxytitanium serving as a catalyst was added, and the resulting mixture was aged at 120°C for 4 to 6 hours.

Next, the poly-ε-caprolactone/polyether copolymer obtained through the above procedure was cooled to near room temperature, and then 70 g of dehydrated toluene, 1.01 g of dioctyltin dineodecanoate serving as a catalyst, and 0.13 g of dibutylhydroxytoluene (BHT) were added. The mixture was stirred for a predetermined time to achieve uniform dissolution, and 28.4 g of 2-isocyanatoethyl acrylate was added dropwise using a dropping funnel. Once heat generation was detected, the mixture was aged at 60°C for 4 hours.

The obtained crude product was subjected to post-treatment and purification treatment using the same method as described in the synthesis example 2 to thereby obtain an acrylic-modified poly-ε-caprolactone/polyether copolymer 5 (formula (13), weight average molecular weight: 7,940).

[Chem. 13]

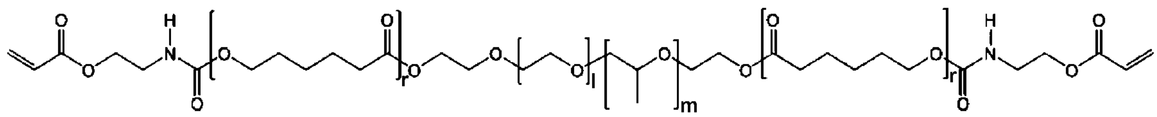

- (13)

(1 ≈ 24 to 26, m ≈ 35 to 37, r ≈ 4 to 5)

[Synthesis of acrylic-modified poly-ε-caprolactone/silicone copolymer - Synthesis example 6]

A 1 L separable flask equipped with a stirrer, a thermometer, a condenser tube, and a dropping funnel was charged with 300 g of carboxy-modified silicone (molecular weight: about 1,200, COOH group equivalent: 0.19 mol/100 g), 202.8 g of poly-ε-caprolactone monoacrylate (OH group equivalent: 0.29 mol/100 g, molecular weight: 344.0), 200 g of dehydrated toluene, and 6.85 g of 4-dimethylaminopyridine (DMAP) (molecular weight: 122.2), and these components were mixed and stirred in an ice bath.

Once the mixture was sufficiently cooled, a solution prepared by dissolving 168.9 g of N,N'-dicyclohexylcarbodiimide (DCC) (molecular weight: 206.3) in 173.6 g of dehydrated toluene was added using a dropping funnel, and the mixture was allowed to react and aged at room temperature for 20 hours. After the aging, 200 g of toluene and 300 g of 0.5 mol/L hydrochloric acid were added for washing (to remove DMAP), and the resulting mixture was subjected to washing operation using a saturated aqueous sodium hydrogencarbonate solution and then a 10% aqueous sodium chloride solution.

After performing the above operation, magnesium sulfate, silica gel, activated carbon, and KYOWAAD 700

(manufactured by Kyowa Chemical Industry Co., Ltd.) were added, and the mixture was shaken to remove impurities by adsorption. The powders were removed by pressure filtration, and 0.09 g of dibutylhydroxytoluene (BHT) was added. The solvent was removed by evaporation under the conditions of 60 to 70°C and 10 mmHg or lower to thereby obtain an acrylic-modified poly-ε-caprolactone/silicone copolymer (the following formula (14), weight average molecular weight: 2,130).

[Chem. 14]

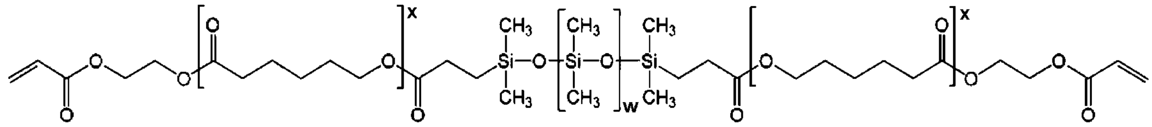

- (14)

(w ≈ 10, x ≈ 2)

[Production of spherical elastomer particles - Production example 1]

A 1 L container of an agi-homo mixer was charged with 250 g of a 2.6% aqueous solution of hydroxypropyl methyl cellulose (product name: METOLOSE 60SH-4,000 manufactured by Shin-Etsu Chemical Co., Ltd.), and the aqueous solution was stirred and mixed under heating at 55 to 60°C while operating a homogenizing mixer and an anchor mixer.

At the same time, a disposable cup was charged with 100 g of the acrylic-modified poly-ε-caprolactone/polyether copolymer 4 described in the synthesis example 4 and 1.0 g of dimethyl 2,2'-azobis-(2-methyl propionate) (molecular weight: 230.3), and the components were premixed using a dispersing mixer and preheated to 60 to 65°C.

Next, the premixed acrylic-modified poly-ε-caprolactone/polyether copolymer was added to the 1 L agi-homo mixer containing the heated aqueous hydroxypropyl methyl cellulose solution, and the resulting mixture was stirred under heating at 55 to 60°C at a homo mixer rotation speed of 4,500 rpm for 10 minutes or longer for suspension, and an O/W type suspension composition was thereby obtained.

Then the obtained suspension composition was stirred and aged at 70°C for 8 hours using a paddle-type stirring impeller at a rotation speed of 200 rpm. Then 50 g of pure water was added, and the resulting mixture was further aged at 80°C at the same rotation speed for 6 hours to thereby obtain a dispersion of spherical elastomer particles.

The shapes of the spherical elastomer particles in the obtained dispersion were observed using an optical microscope and were found to be spherical. Their volume average particle diameter was measured by an electric resistance method using a particle size distribution analyzer (Multisizer 3 manufactured by Beckman Coulter, Inc.) and was found to be 5 μm.

The obtained spherical elastomer particle dispersion was filtered using a mesh (#100) to check the presence of aggregates. When aggregates were found, they were removed, and then pure water present as a continuous phase was removed by solid-liquid separation using pressure filtration. This washing-separation procedure using pure water was repeated three times, and the water was thereby removed. When the solid-liquid separation in the pressure filtration step was not successful, centrifugation may be optionally performed.

Finally, the concentrate of the resulting spherical elastomer particles was left to stand and dried for 8 hours or longer to obtain the target spherical elastomer particles as a white to light yellow powder.

The obtained spherical elastomer particle powder was observed using an electron microscope (scanning electron microscope S-4700 manufactured by Hitachi High-Technologies Corporation), and the spherical elastomer particles were found to be spherical particles with a diameter of about 5 μm. The aspect ratio of the obtained spherical elastomer particles was 1.0.

The obtained spherical elastomer particles were re-dispersed in water using polyoxyethylene lauryl ether serving as a surfactant, and measurement using an electric resistance method was performed on the dispersion to evaluate the dispersion. The volume average particle diameter was found to be 5 μm.

The hardness of the elastomer (rubber) as a constituent of the spherical elastomer particles was measured as follows.

30 g of the synthesized acrylic-modified poly-ε-caprolactone/polyether copolymer 4 and 0.24 g of 2'-azobis-(2,4-dimethylvaleronitrile) (molecular weight: 248.4) were mixed and stirred and then poured into an aluminum-made petri dish such that the thickness of the mixture was 10 mm. The petri dish was left to stand at 70°C in an air thermostatic chamber for 1 to 2 hours, and a flat rubber with no stickiness (no tackiness) was thereby obtained. The rubber hardness of the obtained flat rubber was measured. The hardness was 72 as measured by an Asker C hardness meter and 55 as measured by an Asker A hardness meter.

[Production of spherical elastomer particles - Production example 2]

Spherical elastomer particles were produced using the same procedure as in the production example 1 except that 250 g of the 2.6% aqueous hydroxypropyl methyl cellulose solution was replaced with 173 g of a 3.8% aqueous hydroxypropyl methyl cellulose solution. The volume average particle diameter of the obtained spherical elastomer particles was 2 μm.

[Production of spherical elastomer particles - Production example 3]

Spherical elastomer particles were produced using the same procedure as in the production example 1 except that the hydroxypropyl methyl cellulose (product name: METOLOSE 60SH-4,000 manufactured by Shin-Etsu Chemical Co., Ltd.) was replaced with hydroxypropyl methyl cellulose (product name: METOLOSE 60SH-50 manufactured by Shin-Etsu Chemical Co., Ltd.). The volume average particle diameter of the obtained spherical elastomer particles was 11 μm.

[Production of spherical elastomer particles - Production example 4]

Spherical elastomer particles were produced using the same procedure as in the production example 1 except that 250 g of the 2.6% aqueous solution of the hydroxypropyl methyl cellulose (product name: METOLOSE 60SH-4,000 manufactured by Shin-Etsu Chemical Co., Ltd.) was replaced with 250 g of a 5.2% aqueous xanthan gum solution. The volume average particle diameter of the obtained spherical elastomer particles was 20 μm.

[Production of elastomer composite particles - Working example 1]

A 500 mL glass flask equipped with a stirrer with a paddle-type stirring impeller was charged with 100 g of the spherical elastomer particle dispersion obtained in the production example 1 and having a solid concentration of 20%, 184.9 g of pure water, and 0.2 g of a 30% aqueous lauryltrimethylammonium chloride solution. The temperature of the water dispersion was adjusted to 5 to 10°C, and 0.75 g of 5.0% ammonia water was added. Then, while the temperature of the water dispersion was maintained at 5 to 10°C, 11.2 g of tetramethoxysilane (this amount corresponds to 22.0 parts of silica based on 100 parts of the spherical elastomer particles after the hydrolysis-polycondensation reaction) was added dropwise over 15 to 30 minutes. The resulting mixture was stirred for 1 hour while the temperature of the mixture was maintained at 5 to 10°C.

Next, the resulting mixture was heated to 55 to 60°C and stirred and aged for 1 hour while the temperature was maintained to complete the hydrolysis-condensation reaction of tetramethoxysilane.

The dispersion obtained by subjecting the tetramethoxysilane in the spherical elastomer particle dispersion to the hydrolysis-condensation reaction was subjected to dehydration using a pressure filtration apparatus to a water content of about 30%. Next, the dehydrated product was transferred to a 1 L glass flask equipped with a stirrer with an anchor-type stirring impeller, and 500 g of water was added. The resulting mixture was stirred for 30 minutes and dehydrated by pressure filtration. This washing/dehydration procedure was repeated three times, and the resulting dehydrated product was dried in a hot air fluidized bed dryer under the condition of 105°C, and the dried product was pulverized using a jet mill to thereby obtain flowable particles.

The obtained particles were observed using an electron microscope. Spherical silica was found to adhere to the spherical elastomer particles so as to cover the entire particle surfaces, and silica-coated spherical elastomer particles (elastomer composite particles) were obtained. The aspect ratio of the silica-coated spherical elastomer particles (elastomer composite particles) obtained in the working example 1 was 1.0.

The obtained silica-coated spherical elastomer particles (elastomer composite particles) were dispersed in water using a surfactant (polyoxyethylene lauryl ether). Their particle size distribution was measured by an electric resistance method using a particle size distribution analyzer (Multisizer 3 manufactured by Beckman Coulter, Inc.), and the volume average particle diameter was found to be about 5 μm with particle size distribution being the same as that of the spherical elastomer particles in the water dispersion described above.

[Production of elastomer composite particles - Working example 2]

Elastomer composite particles were produced using the same procedure as in the working example 1 except that the spherical elastomer particles in the production example 2 were used instead of the spherical elastomer particles in the production example 1. In the silica-coated spherical elastomer particles (elastomer composite particles) obtained, spherical silica was found to adhere to the spherical elastomer particles so as to cover the entire particle surfaces, and their volume average particle diameter was about 2 μm.

[Production of elastomer composite particles - Working example 3]

Elastomer composite particles were produced using the same procedure as in the working example 1 except that the spherical elastomer particles in the production example 3 were used instead of the spherical elastomer particles in the production example 1. In the silica-coated spherical elastomer particles (elastomer composite particles) obtained, spherical silica was found to adhere to the spherical elastomer particles so as to cover the entire particle surfaces, and their volume average particle diameter was about 11 μm.

[Production of elastomer composite particles - Working example 4]

Elastomer composite particles were produced using the same procedure as in the working example 1 except that the spherical elastomer particles in the production example 4 were used instead of the spherical elastomer particles in the production example 1. In the silica-coated spherical elastomer particles (elastomer composite particles) obtained, spherical silica was found to adhere to the spherical elastomer particles so as to cover the entire particle surfaces, and their volume average particle diameter was about 20 μm.

[Production of elastomer composite particles - Working example 5]

A 500 mL glass flask equipped with a stirrer including a paddle-type stirring impeller was charged with 100 g of the spherical elastomer particle dispersion obtained in the production example 3 and having a solid concentration of 20%, 184.9 g of pure water, and 0.2 g of a 30% aqueous lauryltrimethylammonium chloride solution. The temperature of the water dispersion was adjusted to 5 to 10°C, and 0.84 g of 5.0% ammonia water was added. Then, while the temperature of the water dispersion was maintained at 5 to 10°C, 12.5 g of methyltrimethoxysilane (this amount corresponds to 22.0 parts of silane based on 100 parts of the spherical elastomer particles after the hydrolysis-polycondensation reaction) was added dropwise over 15 to 20 minutes. The resulting mixture was stirred for 1 hour while the temperature of the mixture was maintained at 5 to 10°C. The subsequent procedure followed that in the working example 1, and flowable particles were thereby obtained.

The obtained particles were observed using an electron microscope. Spherical polyorganosilsesquioxane was found to adhere to the spherical elastomer particles so as to cover the entire particle surfaces, and resin (polyorganosilsesquioxane)-coated spherical elastomer particles (elastomer composite particles) were obtained. The aspect ratio of the resin (polyorganosilsesquioxane)-coated spherical elastomer particles (elastomer composite particles) obtained in the working example 5 was 1.0.

The obtained resin (polyorganosilsesquioxane)-coated spherical elastomer particles (elastomer composite particles) were dispersed in water using a surfactant (polyoxyethylene lauryl ether). Their particle size distribution was measured by an electric resistance method using a particle size distribution analyzer (Multisizer 3 manufactured by Beckman Coulter, Inc.), and the volume average particle diameter was found to be about 11 μm with particle size distribution being the same as that of the spherical elastomer particles in the water dispersion described above.

[Production of elastomer composite particles - Working example 6]

Elastomer composite particles were produced using the same procedure as in the working example 1 except that the amount of the tetramethoxysilane added was changed from 11.2 g (this amount corresponds to 22.0 parts of silica based on 100 parts of the spherical elastomer particles after the hydrolysis-polycondensation reaction) to 5.6 g (this amount corresponds to 11.0 parts of silica based on 100 parts of the spherical elastomer particles after the hydrolysis-polycondensation reaction). In the silica-coated spherical elastomer particles (elastomer composite particles) obtained, spherical silica was found to adhere to the spherical elastomer particles so as to cover the entire particle surfaces, and their volume average particle diameter was about 5 μm.

The particle diameter of the spherical silica or resin (polyorganosilsesquioxane) adhering to and coating the surfaces of the spherical elastomer particles obtained in each working example is as shown in the following table.

[Table 1]

| | Working example 1 | Working example 2 | Working example 3 | Working example 4 | Working example 5 | Working example 6 |
|---|---|---|---|---|---|---|
| Particle diameter [nm] of silica or resin (polyorganosilsesquioxane) | 26 | 21 | 34 | 42 | 66 | 17 |

[Evaluation of biodegradability]

The biodegradability of the acrylic-modified poly-ε-caprolactone/polyether copolymer 1 was evaluated according to the evaluation method described above. The measurement was performed at an incubation temperature of 22±1°C for 60 days. The degree of biodegradation of the acrylic-modified poly-ε-caprolactone/polyether copolymer 1 was 62% on average at day 28 and 73% on average at day 60. Since the degree of biodegradation was better than the evaluation criterion at day 28, i.e., a degree of biodegradation of 60%, the acrylic-modified poly-ε-caprolactone/polyether copolymer 1 was determined as a "readily biodegradable material."

Therefore, even when spherical elastomer particles produced as crosslinked particles of the acrylic-modified poly-ε-caprolactone/polyether copolymer 1 and composite particles derived from these particles flow into the oceans through inland water etc. after use, they are expected to eventually degrade and not persist in the environment as particles.

The biodegradability of each of the acrylic-modified poly-ε-caprolactone/polyether copolymers 2 to 4 was evaluated. Specifically, the measurement was performed at an incubation temperature of 22±1°C for 60 days. The degree of biodegradation of each of the acrylic-modified poly-ε-caprolactone/polyether copolymers 2 to 4 was 40% on average at day 28 and 65% on average at day 60. Since the degree of biodegradation was better than the evaluation criterion at day 60, i.e., a degree of biodegradation of 60%, the acrylic-modified poly-ε-caprolactone/polyether copolymers were determined as "inherently biodegradable materials."

Therefore, even when spherical elastomer particles produced as crosslinked particles of each of the acrylic-modified poly-ε-caprolactone/polyether copolymers 2 to 4 and composite particles derived from these particles flow into the oceans through inland water etc. after use, they are expected to eventually degrade and not persist in the environment as particles.

The biodegradability of the acrylic-modified poly-ε-caprolactone/silicone copolymer was evaluated. Specifically, the measurement was performed at an incubation temperature of 22±1°C for 28 days. The degree of biodegradation of the acrylic-modified poly-ε-caprolactone/silicone copolymer was only 26% at day 28, and no further increase in the degree of biodegradation was observed thereafter.

Since the degree of biodegradation was lower than the evaluation criterion at day 28, i.e., a degree of biodegradation of 60%, the acrylic-modified poly-ε-caprolactone/silicone copolymer was not determined as a "(readily) biodegradable material."

The elastomer composite particles (resin- or silica-coated spherical elastomer particles) in the invention are expected to be particularly useful for cosmetic applications because of their characteristic structural composition.

Since the degradable polyester structure (particularly, the degradable poly-ε-caprolactone structure) and the polyether structure are present in the powder/particle skeleton, high biodegradability is expected to be exhibited and imparted.

## Claims

**1.** Elastomer composite particles, each comprising:

a spherical elastomer particle that is a crosslinked particle of a copolymer having a polyester structure and a polyether structure; and
polyorganosilsesquioxane or silica on a surface of the spherical elastomer particle,
wherein the spherical elastomer particles have a volume average particle diameter of 0.5 to 200 μm.

**2.** The elastomer composite particles according to claim 1, wherein the copolymer is a polyester-polyether copolymer having at least two radical-polymerizable unsaturated groups per molecule.

**3.** The elastomer composite particles according to claim 2, wherein the copolymer is a polyester-polyether copolymer represented by general formula (1) or (2) defined as:

[Chemical formula 1]

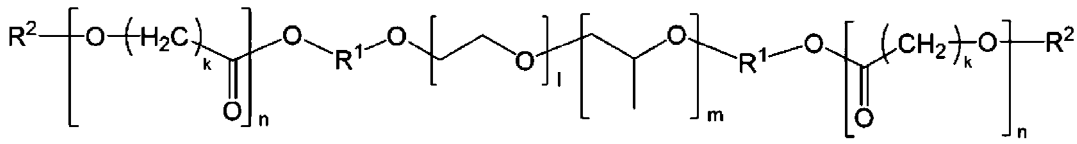

- (1)

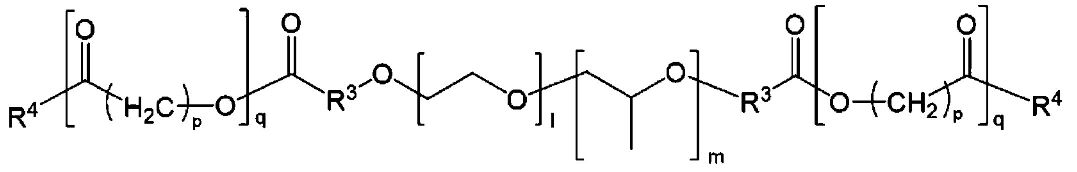

- (2)

wherein, in the general formula (1), each $R^1$ independently represents a divalent hydrocarbon group having 1 to 10 carbon atoms; each $R^2$ independently represents a radical-polymerizable functional group-containing organic group represented by general formula (3a), (3b), or (3c) shown below; each k is independently a number satisfying $1 \leq k \leq 10$; 1 is a number satisfying $1 \leq 1 \leq 1{,}000$, m is a number satisfying $1 \leq m \leq 1{,}000$; and each n is independently a number satisfying $1 \leq n \leq 100$, and

wherein, in the general formula (2), each $R^3$ independently represents a divalent hydrocarbon group having 1 to 10 carbon atoms; each $R^4$ independently represents a radical-polymerizable functional group-containing organic group represented by general formula (4a) or (4b) shown below; each p is independently a number satisfying $1 \leq p \leq 10$; 1 is a number satisfying $1 \leq 1 \leq 1{,}000$; m is a number satisfying $1 \leq m \leq 1{,}000$; and each q is independently a number satisfying $1 \leq q \leq 100$,

[Chemical formula 2]

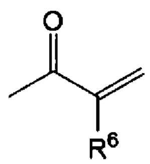

- (3a)

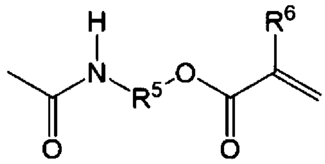

- (3b)

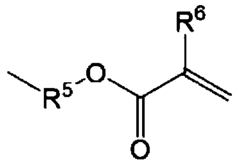

- (3c)

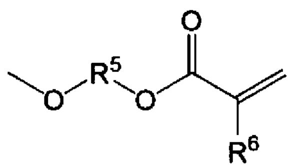

- (4a)

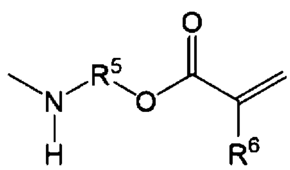

- (4b)

wherein, in the general formulas (3a), (3b), (3c), (4a), and (4b), each $R^5$ independently represents a divalent

hydrocarbon group having 1 to 8 carbon atoms; and each $R^6$ independently represents a hydrogen atom or a hydrocarbon group having 1 to 3 carbon atoms.

**4.** The elastomer composite particles according to claim 2, wherein the copolymer is a polyester-polyether copolymer represented by general formula (5) defined as:

[Chemical formula 3]

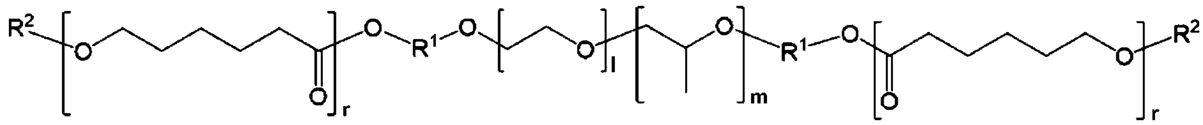

- (5)

wherein, in the general formula (5), each $R^1$ independently represents a divalent hydrocarbon group having 1 to 10 carbon atoms; each $R^2$ independently represents a radical-polymerizable functional group-containing organic group represented by general formula (3a), (3b), or (3c) shown below; 1 is a number satisfying $1 \leq 1 \leq 1{,}000$; m is a number satisfying $1 \leq m \leq 1{,}000$; and each r is independently a number satisfying $1 \leq r \leq 100$,

[Chemical formula 4]

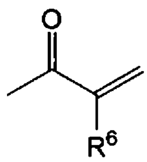

- (3a)

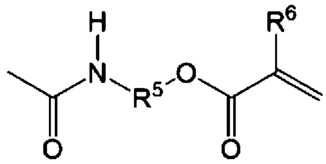

- (3b)

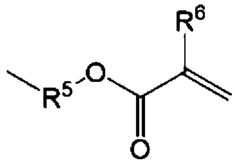

- (3c)

wherein, in the general formulas (3a), (3b), and (3c), each $R^5$ independently represents a divalent hydrocarbon group having 1 to 8 carbon atoms, and each $R^6$ independently represents a hydrogen atom or a hydrocarbon group having 1 to 3 carbon atoms.

**5.** A method for producing spherical elastomer particles, the method comprising the steps i) to iii) of:

i) stirring and suspending components (A), (B), (C), and (D) to prepare a suspension composition, said components defined as

(A) a copolymer having a polymerizable group and having a polyester structure and a polyether structure,
(B) an oil phase component or an aqueous phase component in which the component (A) is insoluble or poorly soluble,
(C) a suspending agent, and
(D) a polymerization initiator;

ii) subjecting the component (A) in the suspension composition obtained through the step i) to radical polymerization to thereby obtain a spherical elastomer particle dispersion; and
iii) removing the component (B) present as a continuous phase from the spherical elastomer particle dispersion obtained through the step ii) by washing and drying to thereby obtain spherical elastomer particles.

**6.** A method for producing the elastomer composite particles according to any one of claims 1 to 4, the method comprising the step iv) of:
iv) adding component (I) to a liquid phase, containing components (E), (F), (G), and (H), to subject the component (I) to a hydrolysis-polymerization reaction, said components defined as:

(E) the spherical elastomer particles produced by the method according to claim 5, the spherical elastomer particles having a volume average particle diameter of 0.5 to 200 μm, the spherical elastomer particles being crosslinked particles of the copolymer having the polyester structure and the polyether structure,
(F) an alkaline material,
(G) at least one selected from a cationic surfactant and a cationic watersoluble macromolecular compound,
(H) water, and
(I) trialkoxysilane or tetraalkoxysilane.

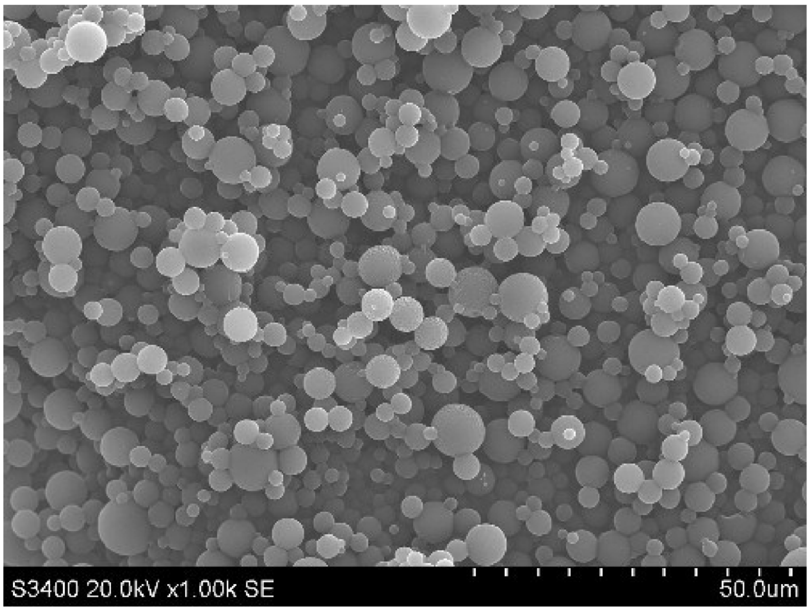


FIG.1

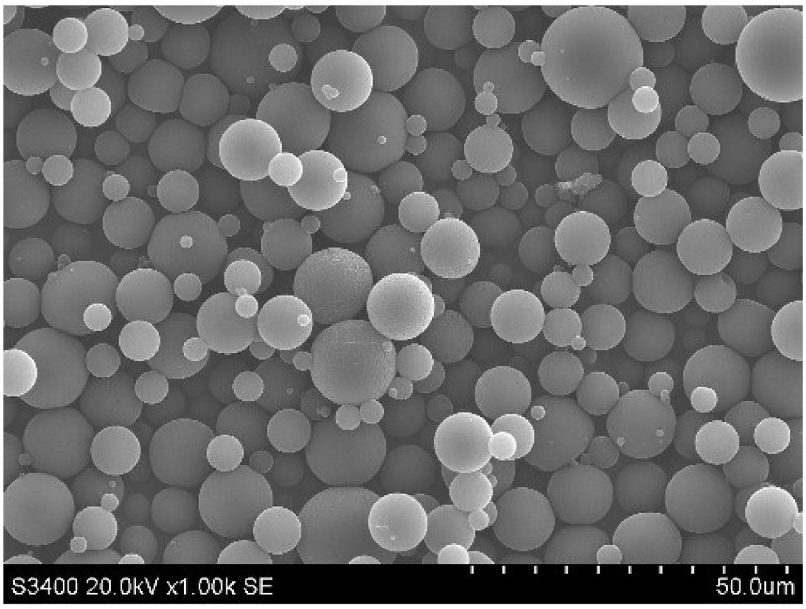


FIG.2

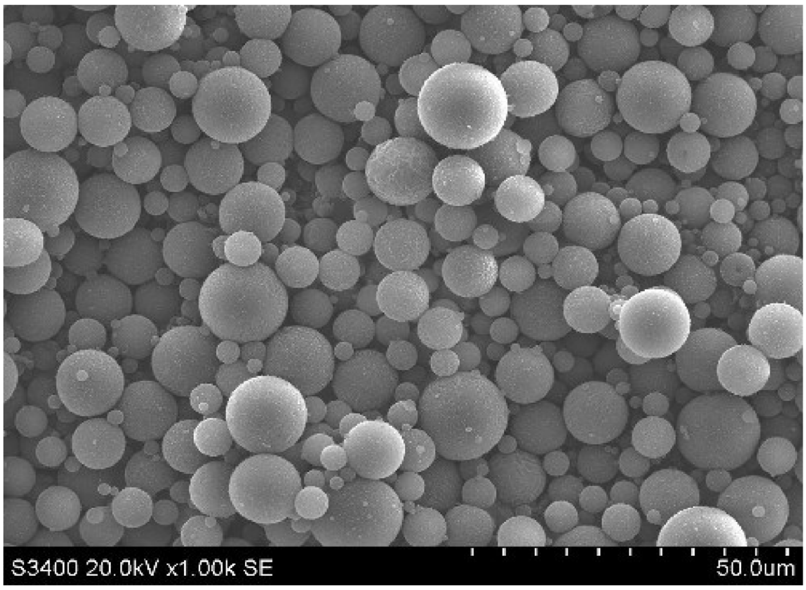


FIG.3

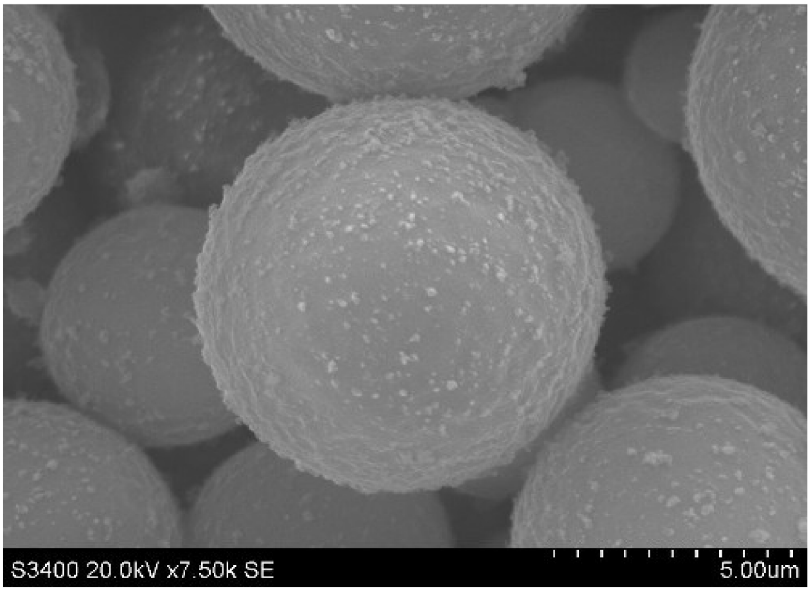


FIG.4

**INTERNATIONAL SEARCH REPORT**

International application No.
**PCT/JP2024/028738**

**A. CLASSIFICATION OF SUBJECT MATTER**

***C08J 7/04***(2020.01)i; ***C08F 2/18***(2006.01)i; ***C08F 290/06***(2006.01)i; ***C08G 77/42***(2006.01)i; ***C08J 3/05***(2006.01)i; ***C08J 3/16***(2006.01)i; ***C08K 3/36***(2006.01)i; ***C08L 67/00***(2006.01)i; ***C08L 83/04***(2006.01)i; ***C08L 101/16***(2006.01)i
FI: C08J7/04 B CEZ; C08F2/18; C08F290/06; C08G77/42; C08J3/05 CEZ; C08J3/16 CFD; C08K3/36; C08L67/00; C08L83/04; C08L101/16

According to International Patent Classification (IPC) or to both national classification and IPC

**B. FIELDS SEARCHED**

Minimum documentation searched (classification system followed by classification symbols)

C08J7/04-7/06; C08J3/00-3/28; C08K3/00-13/08; C08L1/00-101/16; C08G63/00-67/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2023/058383 A1 (SHIN-ETSU CHEMICAL CO., LTD.) 13 April 2023 (2023-04-13) whole document, in particular, claims | 1-6 |
| A | WO 2021/220625 A1 (SHIN-ETSU CHEMICAL CO., LTD.) 04 November 2021 (2021-11-04) whole document, in particular, claims | 1-6 |
| A | JP 2014-028934 A (TORAY INDUSTRIES, INC.) 13 February 2014 (2014-02-13) whole document | 1-6 |
| A | WO 2012/043510 A1 (TORAY INDUSTRIES, INC.) 05 April 2012 (2012-04-05) whole document | 1-6 |
| A | JP 2005-314535 A (TORAY INDUSTRIES, INC.) 10 November 2005 (2005-11-10) whole document | 1-6 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 October 2024** | **15 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/028738**

**C. DOCUMENTS CONSIDERED TO BE RELEVANT**

| Category* | Citation of document, with indication, where appropriate, of the relevant passages | Relevant to claim No. |
|---|---|---|
| A | JP 2016-033178 A (TORAY INDUSTRIES, INC.) 10 March 2016 (2016-03-10) whole document | 1-6 |
| A | JP 9-504042 A (MASSACHUSETTS INSTITUTE OF TECHNOLOGY) 22 April 1997 (1997-04-22) whole document | 1-6 |
| A | JP 57-172924 A (TORAY INDUSTRIES, INC.) 25 October 1982 (1982-10-25) whole document | 1-6 |

Form PCT/ISA/210 (second sheet) (July 2022)

**INTERNATIONAL SEARCH REPORT**
**Information on patent family members**

International application No.
**PCT/JP2024/028738**

| Patent document cited in search report | Publication date (day/month/year) | Patent family member(s) | Publication date (day/month/year) |
|---|---|---|---|
| WO 2023/058383 A1 | 13 April 2023 | CN 118076657 A | |
| | | KR 10-2024-0072252 A | |
| | | TW 202315903 A | |
| WO 2021/220625 A1 | 04 November 2021 | US 2023/0348720 A1 whole document, in particular, claims | |
| | | EP 4144783 A1 | |
| | | CN 115461390 A | |
| | | KR 10-2023-0002467 A | |
| | | TW 202146538 A | |
| JP 2014-028934 A | 13 February 2014 | (Family: none) | |
| WO 2012/043510 A1 | 05 April 2012 | US 2013/0183528 A1 whole document | |
| | | EP 2623542 A1 | |
| | | CN 103119101 A | |
| | | KR 10-2013-0114659 A | |
| | | TW 201219459 A | |
| | | AU 2012313453 A | |
| | | BR 112014007130 A | |
| JP 2005-314535 A | 10 November 2005 | (Family: none) | |
| JP 2016-033178 A | 10 March 2016 | (Family: none) | |
| JP 9-504042 A | 22 April 1997 | US 5543158 A whole document | |
| | | WO 1995/003357 A1 | |
| | | EP 710261 A1 | |
| | | CA 2167921 A | |
| | | CA 2167920 A | |
| JP 57-172924 A | 25 October 1982 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP S6312489 B
- JP H0655805 B
- JP H02102263 A
- JP H0812546 A
- JP H0812545 A
- JP H0417162 B
- JP H0466446 B
- JP S58219218 A
- JP H0885753 A
- JP H10182987 A
- JP 2001040214 A
- JP S63297313 A
- JP H0812524 A
- JP H0920631 A

### Non-patent literature cited in the description

- Ready Biodegradability: MANOMETRIC RESPIROMETRY TEST. *OECD Guidelines for the Testing of Chemicals*, 17 July 1992 (301F)